# EUROPEAN PATENT APPLICATION

(11) **EP 4 832 212 A1**
(43) Date of publication of application: **28.10.2026**
(21) Application number: 24906302.5
(22) Date of filing: 16.12.2024
(51) Int. Cl.: H01M 50/30, H01M 50/342

(54) **BATTERY CELL, BATTERY, AND ELECTRICAL DEVICE**

(30) Priority: 22.12.2023 CN 202323527461 U
(71) Applicant: Contemporary Amperex Technology Co., Limited, Ningde, Fujian 352100 (CN)
(72) Inventor: WU, Kai, Ningde, Fujian 352100 (CN); XING, Chengyou, Ningde, Fujian 352100 (CN); LI, Xiao, Ningde, Fujian 352100 (CN); JIN, Haizu, Ningde, Fujian 352100 (CN); LI, Quankun, Ningde, Fujian 352100 (CN); WANG, Peng, Ningde, Fujian 352100 (CN)
(74) Representative: Gong, Jinping
(86) International application number: PCT/CN2024/139669
(87) International publication number: WO 2025/130821

(57) **Abstract**

This application discloses a battery cell, a battery, and an electric device. The battery cell includes a housing and an exhaust assembly. The housing has a wall portion. The exhaust assembly is arranged on the wall portion. The exhaust assembly includes a one-way valve and/or a gas-permeable membrane assembly. The gas-permeable membrane assembly includes a gas-permeable membrane. The exhaust assembly is configured to discharge gas inside the housing. The wall portion is provided with a first weakened zone. The first weakened zone is arranged along a circumferential direction of the exhaust assembly. Through this arrangement, the gas inside the housing of the battery cell can be discharged out of the housing in a timely manner. In addition, when an internal pressure or temperature of the battery cell reaches a threshold, the internal pressure of the battery cell can be relieved.

## Description

### CROSS-REFERENCE TO RELATED APPLICATIONS

This application claims priority to Chinese Patent Application No. 202323527461.8, filed on December 22, 2023 and entitled "BATTERY CELL, BATTERY, AND ELECTRIC DEVICE", which is incorporated herein by reference in its entirety.

### TECHNICAL FIELD

This application relates to the field of new energy technologies, and in particular, to a battery cell, a battery, and an electric device.

### BACKGROUND

As global energy and environmental issues continue to intensify, new energy, as one of the fields of sustainable development, is developing rapidly. Batteries, as a new energy method, are being applied more and more widely, and have high requirements for use reliability and service life. During charging and discharging of a battery cell, generation of gas inside the battery cell causes an internal pressure of the battery cell to increase. If the generated gas is not discharged in time, when the internal pressure or temperature of the battery cell reaches a threshold, dangers such as combustion and explosion are likely to occur. The above statements are only used to provide background information related to this application and do not necessarily constitute prior art.

### SUMMARY

The main technical problem solved by this application is to provide a battery cell, a battery, and an electric device, which can discharge gas inside a housing of the battery cell out of the housing in a timely manner. In addition, when an internal pressure or temperature of the battery cell reaches a threshold, the internal pressure of the battery cell can be relieved.

In order to solve the above technical problems, a technical solution adopted by this application is to provide a battery cell. The battery cell includes a housing and an exhaust assembly. The housing has a wall portion. The exhaust assembly is arranged on the wall portion. The exhaust assembly includes a one-way valve and/or a gas-permeable membrane assembly. The gas-permeable membrane assembly includes a gas-permeable membrane. The exhaust assembly is configured to discharge gas inside the housing. The wall portion is provided with a first weakened zone. The first weakened zone is arranged along a circumferential direction of the exhaust assembly. Through this arrangement, the gas inside the housing of the battery cell can be discharged out of the housing in a timely manner. In addition, when an internal pressure or temperature of the battery cell reaches a threshold, the internal pressure of the battery cell can be relieved.

According to an embodiment of this application, the first weakened zone includes a first thinned zone. This arrangement helps to simplify the preparation process.

According to an embodiment of this application, the first weakened zone includes a first groove recessed relative to a surface of the wall portion, and the first groove is arranged around the exhaust assembly. This arrangement helps to simplify the preparation process.

According to an embodiment of this application, the wall portion has an outer surface and an inner surface arranged opposite to each other. The outer surface is arranged toward an exterior of the housing, and the inner surface is arranged toward an interior of the housing. The first groove is recessed relative to the outer surface; and/or the first groove is recessed relative to the inner surface. This arrangement helps to further reduce the strength of the first weakened zone.

According to an embodiment of this application, the first weakened zone includes a plurality of second grooves recessed relative to a surface of the wall portion. The plurality of second grooves are spaced apart in the circumferential direction of the exhaust assembly. This arrangement helps to simplify the preparation process.

According to an embodiment of this application, the first weakened zone further includes a score provided at a bottom of the first groove and/or the second groove. This arrangement helps to further reduce the strength of the first weakened zone.

According to an embodiment of this application, the wall portion includes a wall portion body and a sinking portion. The wall portion body has an outer surface and an inner surface arranged opposite to each other. The outer surface is arranged toward the exterior of the housing, and the inner surface is arranged toward the interior of the housing. The sinking portion is connected to the wall portion body. The sinking portion protrudes from the inner surface. The first weakened zone is provided on the sinking portion. This arrangement helps to further reduce the strength of the first weakened zone.

According to an embodiment of this application, the wall portion is provided with a first exhaust hole. The first exhaust hole communicates the interior of the housing with the exterior of the housing. The exhaust assembly includes a one-way valve. The one-way valve covers the first exhaust hole. This arrangement helps to balance the sealing performance and ventilation performance of the battery cell.

According to an embodiment of this application, the wall portion has the outer surface and the inner surface arranged opposite to each other. The outer surface is arranged toward the exterior of the housing, and the inner surface is arranged toward the interior of the housing. The one-way valve is arranged on the outer surface. The one-way valve includes a valve body. At least part of the valve body protrudes from the outer surface. This arrangement helps to the assembly of the one-way valve.

According to an embodiment of this application, the valve body is provided with a second weakened zone. An actuation pressure of the second weakened zone is greater than a valve opening pressure of the one-way valve. The actuation pressure of the second weakened zone is less than an actuation pressure of the first weakened zone. Through this arrangement, when the internal pressure of the battery cell is too high, gas inside the battery cell can be discharged outward in a hierarchical manner.

According to an embodiment of this application, the valve body has a valve cavity provided inside. The valve body includes a valve seat and a valve cover. The valve cover includes a cover top wall and a cover side wall connected to the cover top wall. The cover top wall, the cover side wall and the valve seat enclose the valve cavity. The second weakened zone is provided on the cover side wall. Through this arrangement, damage to the battery housing caused by valve body fracture can be reduced.

According to an embodiment of this application, the second weakened zone includes a plurality of third grooves provided on the cover side wall. Through this arrangement, damage to the battery housing caused by valve body fracture can be reduced.

According to an embodiment of this application, the one-way valve includes a valve body and a valve core. The valve body has a valve cavity provided inside. The valve body is provided with a gas inlet and a gas outlet. The gas inlet is configured to communicate the valve cavity with the interior of the housing. The gas outlet is configured to communicate the valve cavity with the exterior of the housing. The valve core is arranged in the valve cavity. The valve core is configured to block the gas inlet. The valve core is configured to open the gas inlet under the action of the gas inside the housing and release the gas inside the battery cell. This arrangement facilitates discharge of gas.

In an embodiment, the valve body includes a valve seat and a valve cover. The valve cover includes a cover top wall and a cover side wall connected to the cover top wall. The cover top wall, the cover side wall and the valve seat enclose the valve cavity. The valve seat is provided with a gas inlet. The valve cover is provided with a gas outlet. This arrangement facilitates discharge of gas.

In an embodiment, the valve seat has a first through hole running through the valve seat, and the gas inlet is the first through hole. This arrangement facilitates discharge of gas.

In an embodiment, the cover side wall has a second through hole running through the cover side wall, and the gas outlet is the second through hole. This arrangement facilitates discharge of gas.

In an embodiment, along a direction leaving the cover top wall, the second through hole extends to an end portion of the cover side wall. This arrangement facilitates discharge of gas.

In an embodiment, a plurality of second through holes are provided, and the plurality of second through holes are spaced apart in a circumferential direction of the side wall. This arrangement facilitates discharge of gas.

In an embodiment, a first guide post is convexly provided on a side of the cover top wall facing towards the valve seat. The cover top wall has a third through hole running through the cover top wall and the first guide post, or the cover top wall has a third through hole running through the cover top wall. The gas outlet is the third through hole. This arrangement facilitates discharge of gas.

In an embodiment, the valve cover further includes a flanging wall. The cover side wall connects the cover top wall and the flanging wall. The flanging wall extends relative to the cover side wall toward a side leaving the valve cavity. The flanging wall is connected to the valve seat. This arrangement helps to the assembly of the one-way valve.

In an embodiment, a side of the valve seat facing towards the valve cover is provided with a first sinking groove recessed relative to a surface of the valve seat. At least part of the flanging wall is accommodated in the first sinking groove and connected to the valve seat. Through this arrangement, the connection strength can be improved while the installation height of the one-way valve is reduced.

In an embodiment, a surface of the flanging wall facing towards the cover top wall is flush with a surface of the valve seat facing towards the valve cover; or a surface of the flanging wall facing towards the cover top wall is lower than a surface of the valve seat facing towards the valve cover. Through this arrangement, the installation height of the one-way valve can be reduced.

In an embodiment, the flanging wall is welded to the valve seat. In the circumferential direction of the cover side wall, at least part of a first weld mark of the flanging wall and the valve seat is staggered from the second through hole on the cover side wall. Through this arrangement, damage to the valve core component caused by high temperature of the welding process can be reduced.

In an embodiment, the valve core includes an elastic member and a blocking member. The elastic member is arranged in the valve cavity. The blocking member is movably arranged in the valve cavity. The blocking member is configured to block the gas inlet under the action of the elastic member and is configured to open the gas inlet under the action of the gas inside the housing. This arrangement facilitates discharge of gas.

In an embodiment, the blocking member includes a pressing portion and a sealing portion. Along a thickness direction of the wall portion, two ends of the elastic member respectively abut against the valve cover and the pressing portion. The sealing portion is connected to a side of the pressing portion facing away from the valve cover. The sealing portion is configured to block the gas inlet. This arrangement is beneficial for transmitting the elastic force of the elastic member to the blocking member, providing the sealing performance of the one-way valve.

In an embodiment, the first exhaust hole includes a through-hole section and a first hole section. The through-hole section and the first hole section are arranged along a thickness direction of the wall portion. The through-hole section communicates the interior of the housing with the exterior of the housing. The first hole section is located on a side of the through-hole section facing away from the interior of the housing. An aperture of the first hole section is larger than an aperture of the through-hole section. The one-way valve is at least partially accommodated in the first hole section. The valve body of the one-way valve faces towards the exterior of the housing and at least part of the valve body protrudes from the outer surface of the wall portion. This arrangement is convenient for the assembly of the one-way valve.

In an embodiment, the first hole section includes a circumferentially arranged hole side surface. A first step surface and a second step surface are provided on the side of the valve seat facing towards the valve cover. The first step surface is closer to the valve cover than the second step surface. An outer peripheral surface of the second step is welded to the hole side surface. Through this arrangement, assembly stability can be improved.

In an embodiment, the wall portion includes a pressure relief mechanism and a pressure relief hole. The pressure relief hole communicates the interior of the housing with the exterior of the housing. The pressure relief mechanism includes a pressure relief sheet. The pressure relief sheet covers the pressure relief hole. The first weakened zone is provided on the pressure relief sheet. The pressure relief mechanism is configured to actuate and relieve an internal pressure of the battery cell when the battery cell is thermally runaway. An actuation pressure of the pressure relief mechanism is greater than an actuation pressure of the first weakened zone. Through this arrangement, when the internal pressure of the battery cell is too high, gas inside the battery cell can be discharged outward in a hierarchical manner.

The pressure relief sheet is provided with a second vent hole. The second vent hole communicates the interior of the housing with the exhaust assembly. The exhaust assembly includes the one-way valve or the gas-permeable membrane assembly. The one-way valve or the gas-permeable membrane assembly is arranged on the pressure relief sheet and covers the second vent hole. This arrangement helps to balance the sealing performance and ventilation performance of the battery cell.

The wall portion is provided with a first exhaust hole. The first exhaust hole communicates the interior of the housing with the exterior of the housing. The exhaust assembly includes the gas-permeable membrane assembly. The gas-permeable membrane assembly covers the first exhaust hole. This arrangement helps to balance the sealing performance and ventilation performance of the battery cell.

In an embodiment, the gas-permeable membrane assembly includes the gas-permeable membrane and a connecting member. The connecting member is provided with a first vent hole. The gas-permeable membrane is arranged on the connecting member and covers the first vent hole. The gas-permeable membrane is configured to allow gas inside the battery cell to pass through the gas-permeable membrane for discharge. Through this arrangement, the connection strength can be improved and the risk of deformation of the gas-permeable membrane can be reduced.

In an embodiment, the connecting member has a first annular land recessed relative to a surface of the connecting member. The first annular land is arranged around the first vent hole. The gas-permeable membrane is arranged on the first annular land. This arrangement helps to reduce the installation height of the gas-permeable membrane assembly.

In an embodiment, the gas-permeable membrane assembly further includes a backing member. The backing member is arranged between the gas-permeable membrane and the connecting member. A gas permeability rate of the backing member is greater than a gas permeability rate of the gas-permeable membrane. By providing the backing member, support can be provided to the gas-permeable membrane, reducing the risk of deformation of the gas-permeable membrane.

In an embodiment, the connecting member further has a second annular land recessed relative to the surface of the connecting member. The second annular land is arranged around the first vent hole. The backing member is arranged on the second annular land. This arrangement can reduce the installation height of the gas-permeable membrane assembly.

In an embodiment, the connecting member is a metal member. This can improve the connection strength between the connecting member and other components.

In an embodiment, the gas-permeable membrane is arranged on a side of the connecting member facing towards an interior of the housing. The gas-permeable membrane covers the first vent hole. Through this arrangement, damage to the gas-permeable membrane from the external environment can be reduced.

In an embodiment, the wall portion has a first recessed step recessed relative to the surface of the wall portion. The first recessed step is arranged around the second vent hole. The gas-permeable membrane assembly is at least partially located on the first recessed step. This arrangement can reduce the installation height of the gas-permeable membrane assembly.

In an embodiment, the housing includes a housing body and an end cover. An accommodating cavity with an opening is formed inside the housing body. The accommodating cavity is configured to accommodate an electrode assembly. The end cover closes the opening. The end cover is the wall portion; or the housing body includes the wall portion; or the wall portion is a wall located at the top of the housing when the battery cell is in a placed state. This arrangement facilitates discharge of gas.

In order to solve the above technical problems, another technical solution adopted by this application is to provide a battery. The battery includes the foregoing battery cell. The battery has at least the same advantages as the battery cell.

In order to solve the above technical problems, another technical solution adopted by this application is to provide an electric device, which includes the foregoing battery. The electric device has at least the same advantages as the battery.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments of this application, and persons of ordinary skill in the art may still derive other drawings from these accompanying drawings without creative efforts.
FIG. 1 is a schematic structural exploded view of a battery cell according to one or more embodiments;
FIG. 2 is a partial schematic structural exploded view of a battery cell according to one or more embodiments;
FIG. 3 is a partial schematic cross-sectional structural diagram of a battery cell 20 according to one or more embodiments;
FIG. 4 is a partial schematic cross-sectional structural diagram of a battery cell 20 according to one or more embodiments;
FIG. 5 is a front view of a one-way valve according to one or more embodiments;
FIG. 6 is a partial schematic cross-sectional structural diagram of a battery cell according to one or more embodiments;
FIG. 7 is a schematic diagram of a status of a one-way valve according to one or more embodiments;
FIG. 8 is a partial schematic structural exploded view of a battery cell according to one or more embodiments;
FIG. 9 is a partial schematic cross-sectional structural diagram of a battery cell according to one or more embodiments;
FIG. 10 is a front view of a one-way valve according to one or more embodiments;
FIG. 11 is a schematic structural exploded view of a one-way valve according to one or more embodiments;
FIG. 12 is a schematic cross-sectional structural diagram of a one-way valve according to one or more embodiments;
FIG. 13 is a partial schematic cross-sectional structural diagram of a battery cell according to one or more embodiments;
FIG. 14 is a schematic cross-sectional structural diagram of a wall portion according to one or more embodiments;
FIG. 15 is a schematic cross-sectional structural diagram of a gas-permeable membrane assembly according to one or more embodiments;
FIG. 16 is a schematic cross-sectional structural diagram of a gas-permeable membrane assembly 40 according to one or more embodiments;
FIG. 17 is a partial schematic cross-sectional structural diagram of a battery cell 20 according to one or more embodiments;
FIG. 18 is a partial schematic cross-sectional structural diagram of a battery cell 20 according to one or more embodiments;
FIG. 19 is a schematic structural exploded view of a battery cell according to one or more embodiments;
FIG. 20 is a schematic structural exploded view of a battery according to one or more embodiments; and
FIG. 21 is a schematic structural diagram of a vehicle according to one or more embodiments.

In the accompanying drawings:
1000. vehicle; 300. motor; 200. controller; 100. battery; 10. box; 11. first part; 12. second part; 20. battery cell; 21. wall portion; 21. end cover; 21a. outer surface; 21b. inner surface; 212. first weakened zone; 212a. first groove; 210. wall portion body; 210a. sinking portion; 291. first exhaust hole; 292. second vent hole; 22. housing body; 23. electrode assembly; 24. insulator; 25. electrode terminal; 280. through-hole section; 281. first hole section; 30. one-way valve; 31. valve body; 311. valve seat; 3111. first through hole; 3112. first sinking groove; 311b. first step surface; 311c. second step surface; 3119. second weakened zone; 312. valve cover; 3121. cover top wall; 31211. first guide post; 31212. third through hole; 3122. cover side wall; 31221. second through hole; 31222. flanging wall; 31222a. connecting surface; 313. valve cavity; 313a. gas inlet; 313b. gas outlet; 32. valve core; 321. blocking member; 322. elastic member; 40. gas-permeable membrane assembly; 41. gas-permeable membrane; 42. metal member; 491. first vent hole; 43. backing member; 70. pressure relief mechanism; 71. pressure relief sheet; 60. protective patch; 601. first avoidance hole; 602. second avoidance hole; 603. information collection hole; 90. exhaust assembly; T1. first annular land; T2. second annular land; T3. transition surface; S1. first recessed step; and W1. first weld mark.

### DESCRIPTION OF EMBODIMENTS

To make the objectives, technical solutions, and effects of this application clearer and more definite, the following describes the embodiments of the technical solutions of this application in detail with reference to the accompanying drawings. The following embodiments are merely used to describe technical solutions in this application more explicitly, and therefore they are merely used as examples and do not constitute a limitation to the protection scope of this application.

Unless otherwise defined, all technical and scientific terms used herein shall have the same meanings as commonly understood by those skilled in the art to which this application belongs. The terms used herein are merely intended to describe the specific embodiments but not intended to constitute any limitation on this application. The terms "include", "comprise", and "having" and any other variations thereof in the specification, the claims and the foregoing brief description of drawings of this application are intended to cover a non-exclusive inclusion.

In descriptions of embodiments of this application, the terms "first", "second" and the like are merely intended to distinguish between different objects, and shall not be understood as any indication or implication of relative importance or any implicit indication of the number, specific sequence or primary-secondary relationship of the technical features indicated. In the description of the embodiments of this application, the term "a plurality of" means more than two (inclusive). Similarly, "a plurality of groups" means more than two (inclusive) groups, and "a plurality of pieces" means more than two (inclusive) pieces, unless otherwise defined.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment.

In the descriptions of embodiments of this application, the term "and/or" in this application describes only an association relationship for describing associated objects and represents that three relationships may exist. For example, A and/or B may represent the following three cases: A alone, both A and B, and B alone. In addition, a character "/" in this specification generally indicates an "or" relationship between contextually associated objects.

Quantities, ratios, and other values are presented in the format of ranges in this specification. It should be understood that such range formats are used for convenience and simplicity and should be flexibly understood as including not only values clearly designated as falling within the range but also all individual values or sub-ranges covered by the range as if each value and sub-range were clearly designated.

In description of the embodiments of this application, like reference signs denote like components, and for brevity, in different embodiments, detailed descriptions of like components are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, or may refer to a direct connection, an indirect connection via an intermediate medium, or an interaction between two elements. Persons of ordinary skill in the art can understand specific meanings of these terms in the embodiments of this application as suitable to specific situations.

Batteries are widely applied in the new energy field, mainly covering electric vehicles, energy storage systems and renewable energy. In the field of electric vehicles, improved performance such as longer driving range and fast charging has been gradually achieved. For energy storage systems, batteries are extensively used in large-scale and distributed energy storage. They can balance grid loads, store renewable energy including solar power and wind power, and release the stored energy during peak demand periods. In addition, small rechargeable batteries are widely adopted in wearable devices, unmanned aerial vehicles, smart home products, and other applications.

During charging and discharging of a battery cell, some side reactions will generate gas. If the gas produced inside the battery cell cannot be discharged in a timely manner, the internal pressure of the battery cell rises. An excessively high internal pressure adversely affects the performance and appearance of the battery cell. For example, in severe cases, destructive damage is caused to the performance and appearance of the battery cell, such as electrolyte leakage, bulging, increased internal resistance of the battery cell, shortened discharge duration, reduced cycle life, or the like. Moreover, abnormal operations including overcharging, overdischarging, or internal fault may occur during the use of the battery cell. In this case, the internal chemical reactions of the battery cell may run out of control, accompanied by intense gas release, and even lead to thermal runaway of the battery cell. Thermal runaway of a battery cell refers to a chain reaction triggered by various incentives. Massive heat and hazardous gases released during thermal runaway may cause fire and explosion of the battery cell.

In view of the above issues, an embodiment of this application provides a battery cell, and an exhaust assembly is disposed on the battery cell. The exhaust assembly can discharge internal gas of the battery cell in time and keep the internal pressure of the battery cell stable.

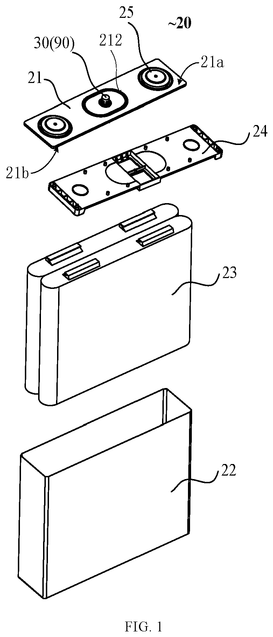

Referring to FIG. 1, FIG. 1 is a schematic structural exploded view of a battery cell according to one or more embodiments. The battery cell 20 refers to a smallest unit constituting a battery. As shown in FIG. 1, the battery cell 20 includes an end cover 21, a housing body 22, an electrode assembly 23, and other functional components.

The end cover 21 refers to a component that covers an opening of the housing body 22 to isolate an internal environment of the battery cell 20 from an external environment. A shape of the end cover 21 is not limited and may be adapted to a shape of the housing body 22 to fit the housing body 22. Optionally, the end cover 21 may be made of a material with certain hardness and strength (for example, aluminum alloy), so that the end cover 21 is less likely to deform when subjected to squeezing and collision, allowing the battery cell 20 to have higher structural strength and enhanced safety performance. The end cover 21 may be provided with functional components such as an electrode terminal 25. The electrode terminal 25 may be configured to be electrically connected to the electrode assembly 23 for outputting or inputting electrical energy of the battery cell 20. For example, the battery cell 20 is provided with two electrode terminals 25, and the two electrode terminals 25 are both mounted on the end cover 21. The two electrode terminals 25 are respectively electrically connected to two tabs with opposite polarities of the electrode assembly 23, so as to realize output or input from or to the positive electrode and the negative electrode of the battery cell 20 respectively. The end cover 21 may also be made of various materials such as copper, iron, aluminum, stainless steel, aluminum alloy, and plastic. This is not particularly limited in the embodiments of this application. In some embodiments, an insulator 24 may also be provided inside the end cover 21, and the insulator 24 may be configured to isolate an electrical connection component in the housing body 22 from the end cover 21 to reduce risks of short circuit. For example, the insulator may be made of plastic, rubber, or the like.

The housing body 22 is an assembly configured to form an internal environment of the battery cell 20 together with the end cover 21, where the formed internal environment may be used for accommodating the electrode assembly 23, an electrolyte, and other components. The housing body 22 and the end cover 21 may be separate components, an opening may be provided on the housing body 22, and the end cover 21 covers the opening to form the internal environment of the battery cell 20. Without limitation, the end cover 21 and the housing body 22 may also be integrated. Specifically, the end cover 21 and the housing body 22 may form a shared connecting surface before other components are disposed inside the housing body, and then the end cover 21 covers the housing body 22 when inside of the housing body 22 needs to be enclosed. The housing body 22 may be of various shapes and sizes, such as a cuboid shape, a cylindrical shape, and a hexagonal prism shape. Specifically, a shape of the housing body 22 may be determined according to a specific shape and size of the electrode assembly 23. The housing body 22 may be made of various materials such as copper, iron, aluminum, stainless steel, aluminum alloy, and plastic. This is not particularly limited in the embodiments of this application.

The electrode assembly 23 is a component in which electrochemical reactions occur in the battery cell 20. The housing body 22 may include one or more electrode assemblies 23. The electrode assembly 23 is mainly formed by winding or stacking a positive electrode plate and a negative electrode plate, and a separator is generally provided between the positive electrode plate and the negative electrode plate. Parts of the positive electrode plate and the negative electrode plate with active substances constitute a body portion of the electrode assembly, while parts of the positive electrode plate and the negative electrode plate without active substances each constitute a tab. A positive tab and a negative tab may both be located at one end of the body portion or be located at two ends of the body portion respectively. During charging and discharging of the battery cell, a positive electrode active substance and a negative electrode active substance react with an electrolyte, and the tabs are connected to the electrode terminals to form a current loop.

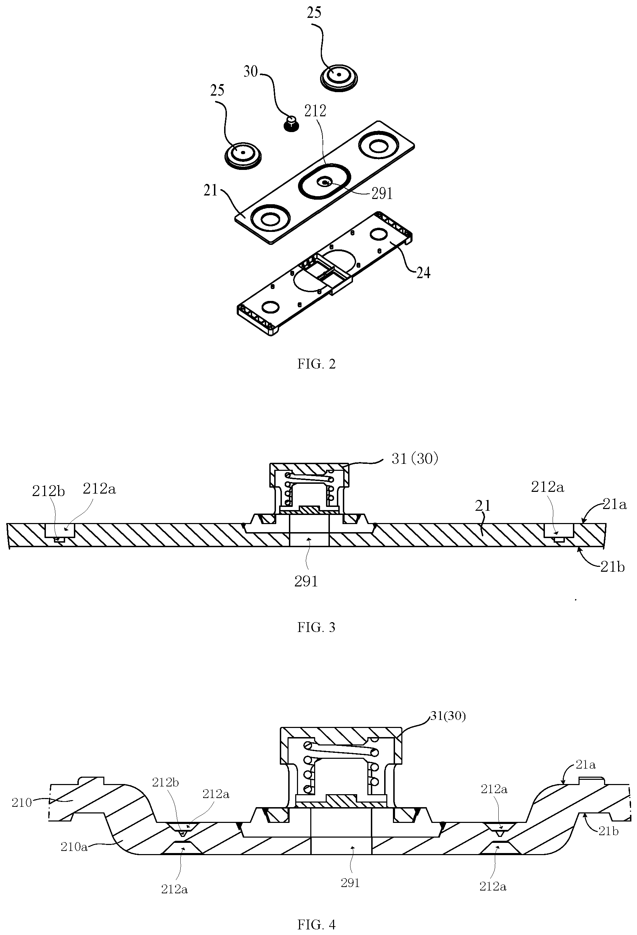

Referring to FIG. 1 and FIG. 2, FIG. 2 is a partial schematic structural exploded view of a battery cell according to one or more embodiments. According to some embodiments of this application, this application discloses a battery cell 20. The battery cell 20 includes a housing and an exhaust assembly 90. The housing has a wall portion 21. The exhaust assembly 90 is arranged on the wall portion 21. The exhaust assembly 90 includes a one-way valve 30 and/or a gas-permeable membrane assembly 40. The gas-permeable membrane assembly 40 includes a gas-permeable membrane 41. The exhaust assembly 90 is configured to discharge gas inside the housing. The wall portion 21 is provided with a first weakened zone 212. The first weakened zone 212 is arranged along a circumferential direction of the exhaust assembly 90.

That the exhaust assembly 90 includes a one-way valve 30 and/or a gas-permeable membrane assembly 40 means that the exhaust assembly 90 may include the one-way valve 30 alone, or the exhaust assembly 90 may include the gas-permeable membrane assembly 40 alone, or the exhaust assembly 90 may include both the one-way valve 30 and the gas-permeable membrane assembly 40. When the exhaust assembly 90 includes both the one-way valve 30 and the gas-permeable membrane assembly 40, the one-way valve 30 and the gas-permeable membrane assembly 40 may be arranged in series. That is, when gas is discharged through the one-way valve 30, it also flows through the gas-permeable membrane assembly 40. The one-way valve 30 and the gas-permeable membrane assembly 40 may alternatively be arranged in parallel. That is, gas can be discharged through the one-way valve 30 and the gas-permeable membrane assembly 40 respectively. In FIG. 1, the exhaust assembly 90 is shown to include the one-way valve 30. By providing the exhaust assembly 90 on the battery cell 20, the gas inside the battery cell 20 can be discharged out of the housing of the battery cell 20 in a timely manner, so that a gas pressure inside the battery cell 20 is maintained within a normal level. This can improve the safety performance of the battery cell 20 and greatly improve the service life of the battery cell 20.

The first weakened zone 212 refers to a zone with a lower strength than other zones of the wall portion 21. If the wall portion 21 is affected by external forces or other factors, the first weakened zone 212 is prone to preferentially suffer damage such as fracture. By providing the first weakened zone 212 on the battery cell 20, when the internal pressure of the battery cell 20 is too high or the temperature reaches a threshold, the wall portion 21 can fracture at the first weakened zone 212 to relieve the internal pressure of the battery cell 20 in time. In other words, the solution provided by this application provides the exhaust assembly 90 on the battery cell 20. During normal use of the battery cell 20, the gas generated inside the housing of the battery cell 20 can be discharged through the exhaust assembly 90. When thermal runaway occurs inside the battery cell 20 or the internal pressure is too high, the wall portion 21 of the battery cell 20 can fracture at the first weakened zone 212 to relieve the gas and the like inside the battery cell 20.

In an embodiment, the first weakened zone 212 includes a first thinned zone. That is, the thickness of this zone is relatively smaller than other zones of the wall portion 21, and the strength is reduced by decreasing the thickness. In other embodiments, the first weakened zone 212 may alternatively be constructed by selecting a material with a different strength, such as selecting some materials with a relatively low strength to form the first weakened zone 212.

According to some embodiments of this application, the housing includes an end cover 21 and a housing body 22. The wall portion may be a wall of the end cover 21 or a wall of the housing body 22. That is, the exhaust assembly 90 may be arranged on the end cover 21 or on the housing body 22. In other words, the wall portion configured to install the exhaust assembly 90 may be the end cover 21 of the housing or a wall of the housing body 22 of the housing. For example, the wall portion is the end cover 21. Certainly, the structure of the battery cell 20 is not limited to this. In other embodiments, the wall portion may alternatively be a bottom wall of the housing body 22 opposite to the end cover 21, and the wall portion may alternatively be a side wall of the housing body 22 adjacent to and connected to the end cover 21. The following describes the solution of this application by taking the wall portion as a wall of the end cover 21 as an example, but this should not limit this application.

Referring to FIG. 1, FIG. 2 and FIG. 3, FIG. 3 is a partial schematic cross-sectional structural diagram of a battery cell 20 according to one or more embodiments. In an embodiment, the first weakened zone 212 includes a first groove 212a recessed relative to a surface of the wall portion 21. The first groove 212a is arranged around the exhaust assembly 90. By providing the first groove 212a on the wall portion 21, the thickness of a region of the wall portion 21 where the first groove 212a is located can be reduced, so that the thickness of the wall portion 21 in this zone is small, thereby realizing the low strength of the wall portion 21 in this zone.

As shown in FIG. 2, the first groove 212a may be an annular groove surrounding the exhaust assembly 90. The first groove 212a may be a score groove formed by etching or other manner. In other embodiments, the first groove 212a may alternatively be a non-closed annular groove, that is, the first groove 212a does not necessarily have to be completely closed in the circumferential direction. It may alternatively be a two-thirds circle groove or a three-quarters circle groove.

In an embodiment, the first weakened zone 212 includes a plurality of second grooves (not shown in the figure) recessed relative to the surface of the wall portion 21. The plurality of second grooves are spaced apart in the circumferential direction of the exhaust assembly 90. In other words, the annular first groove can be segmented into a plurality of second grooves. In this embodiment, the thickness of the wall portion 21 in this zone can be made small by providing discontiguous grooves, thereby realizing the low strength of the wall portion 21 in this zone.

In an embodiment, the first weakened zone further includes a score 212b provided at a bottom of the first groove 212a and/or the second groove. As shown in FIG. 3, the bottom of the first groove 212a is provided with the score 212b. Through this arrangement, the strength at the first groove 212a can be further reduced, which is beneficial for the wall portion 21 to be broken here.

Referring to FIG. 4, FIG. 4 is a partial schematic cross-sectional structural diagram of a battery cell 20 according to one or more embodiments. In an embodiment, the wall portion 21 has an outer surface 21a and an inner surface 21b arranged opposite to each other. The outer surface 21a is arranged toward an exterior of the housing, and the inner surface 21b is arranged toward an interior of the housing. The first groove 212a is recessed relative to the outer surface 21a of the wall portion 21; and/or the first groove 212a is recessed relative to the inner surface 21b of the wall portion 21.

The first groove 212a may be provided on both the inner and outer sides of the wall portion 21; the first groove 212a may alternatively be provided only on the side of the outer surface 21a of the wall portion 21; or the first groove 212a may be provided only on the side of the inner surface 21b of the wall portion 21. As shown in FIG. 4, the first groove 212a is provided on both the side of the outer surface 21a and the side of the inner surface 21b of the wall portion 21. When the first groove 212a is provided on both sides, orthographic projections of the first grooves 212a on both sides on the wall portion 21 may be set to at least partially overlap. Through this arrangement, the thickness of the wall portion 21 can be reduced from both sides, reducing the thickness of the wall portion 21 at the first groove 212a, realizing thickness reduction of this zone. When the internal pressure of the battery cell 20 is too high, the wall portion 21 is more likely to fracture at the first groove 212a. When the first groove 212a is provided on both the inner and outer sides of the wall portion 21, the score 212b may be provided only at the bottom of the first groove 212a on one side. Certainly, the score 212b may also be provided at the bottom of the first grooves 212a on both sides. As shown in FIG. 4, the bottom of the first groove 212a outside the wall portion 21 is provided with the score 212b.

Still refer to FIG. 4. The wall portion 21 includes a wall portion body 210 and a sinking portion 210a. The wall portion body 210 has an outer surface 21a and an inner surface 21b arranged opposite to each other. The outer surface 21a is arranged toward the exterior of the housing, and the inner surface 21b is arranged toward the interior of the housing. The sinking portion 210a is connected to the wall portion body 210. The sinking portion 210a protrudes from the inner surface 21b. The first weakened zone 212 is provided on the sinking portion 210a.

The wall portion 21 may be stamped to form the recessed sinking portion 210a. Through this arrangement, on the one hand, the strength of this zone can be reduced after stamping; and on the other hand, the space occupation in the height direction of the battery cell 20 caused by the arrangement of the exhaust assembly 90 can be reduced.

Refer to FIG. 1, FIG. 2, FIG. 3 and FIG. 4 in combination. In an embodiment, the wall portion 21 is provided with a first exhaust hole 291. The first exhaust hole 291 communicates the interior of the housing with the exterior of the housing. The exhaust assembly 90 includes a one-way valve 30. The one-way valve 30 covers the first exhaust hole 291. In this embodiment, the one-way valve 30 is used as the exhaust assembly 90. The valve opens to release gas when the internal pressure of the battery cell 20 reaches a predetermined pressure. As the internal pressure of the battery cell 20 decreases, the one-way valve 30 closes again to achieve sealing of the battery cell 20. In other words, when ventilation of the one-way valve 30 is essentially intermittent ventilation. In this way, the battery cell 20 does not need to be in a ventilation state all the time, which helps maintain the sealing performance of the battery cell 20 and reduces the intrusion of external water vapor.

In an embodiment, at least part of the one-way valve 30 is accommodated in the first exhaust hole 291.

Refer to FIG. 1, FIG. 2, FIG. 3 and FIG. 4. In an embodiment, the wall portion 21 has the outer surface 21a and the inner surface 21b arranged opposite to each other. The outer surface 21a is arranged toward the exterior of the housing, and the inner surface 21b is arranged toward the interior of the housing. The one-way valve 30 is arranged on the outer surface 21a. The one-way valve 30 includes a valve body 31. At least part of the valve body 31 protrudes from the outer surface 21a. This arrangement facilitates the assembly of the one-way valve 30.

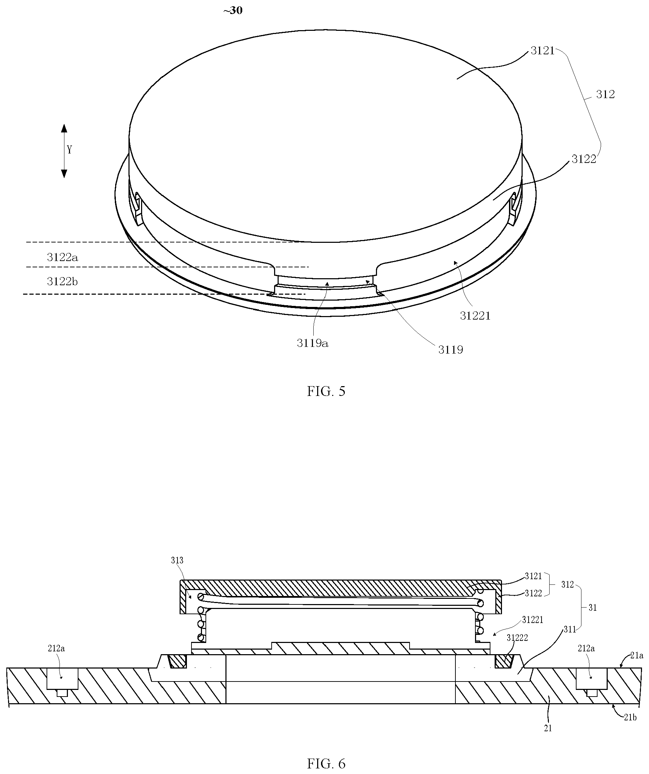

Referring to FIG. 5 and FIG. 6, FIG. 5 is a front view of a one-way valve according to one or more embodiments. FIG. 6 is a partial schematic cross-sectional structural diagram of a battery cell according to one or more embodiments. In an embodiment, the valve body 31 of the one-way valve 30 is provided with a second weakened zone 3119. An actuation pressure of the second weakened zone 3119 is greater than a valve opening pressure of the one-way valve 30. The actuation pressure of the second weakened zone 3119 is less than an actuation pressure of the first weakened zone 212.

The actuation pressure of the first weakened zone 212 refers to a pressure that can cause the wall portion 21 to be broken at the first weakened zone 212. Similarly, the actuation pressure of the second weakened zone 3119 refers to a pressure that can cause the one-way valve 30 to be broken at the second weakened zone 3119.

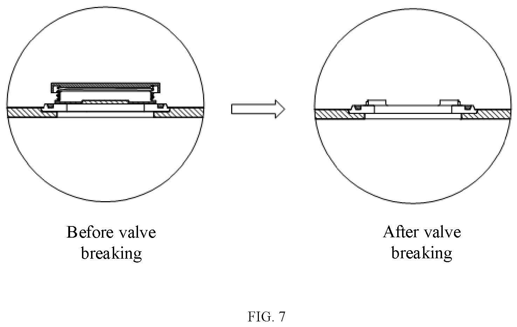

In some embodiments, that an actuation pressure of the second weakened zone 3119 is greater than an opening pressure of the one-way valve 30 means: a pressure of gas inside the housing of the battery cell 20 in breaking the one-way valve 30 at the second weakened zone 3119 is greater than a pressure of the gas inside the housing in opening the one-way valve 30. When the internal pressure of the battery cell 20 is too high or thermal runaway occurs, the gas inside the housing of the battery cell 20 increases rapidly to break through the valve body 31 of the one-way valve 30 (as shown in FIG. 7, FIG. 7 is a schematic diagram of a status of a one-way valve according to one or more embodiments) so as to achieve pressure relief. When reaching a threshold, gas generated inside the housing 21 during normal use of the battery cell 20 opens the one-way valve 30, but cannot break through the valve body 31 of the one-way valve 30.

That the actuation pressure of the second weakened zone 3119 is less than an actuation pressure of the first weakened zone 212 means: a pressure of gas inside the housing of the battery cell 20 in breaking the one-way valve 30 at the second weakened zone 3119 is less than a pressure at which the gas inside the housing in breaking the wall portion 21 at the first weakened zone 212. When the internal pressure of the battery cell 20 is too high or thermal runaway occurs, the gas inside the housing of the battery cell 20 increases rapidly and preferentially breaks through the valve body 31 of the one-way valve 30 for pressure relief. If the pressure relief requirement is still not met, as the pressure increases, it can further break through the wall portion 21 for pressure relief. However, when reaching a threshold, gas generated inside the housing 21 during normal use of the battery cell 20 can open the one-way valve 30, but cannot break through the valve body 31 of the one-way valve 30 and the wall portion 21.

This arrangement is equivalent to designing a multi-level control valve. When the battery cell 20 is in normal use, the one-way valve 30 is used for ventilation. In this case, both the one-way valve 30 and the wall portion 21 are intact. If the internal air pressure of the battery cell 20 suddenly increases and the pressure is too high, the valve body 31 of the one-way valve 30 can be broken first for pressure relief. In this case, the wall portion 21 is intact. If the pressure relief is still not obvious, as the pressure increases, the wall portion 21 can be broken for pressure relief. With the multi-level arrangement, the gas inside the housing can be discharged out of the housing in a timely manner, so that the air pressure inside the housing is not too high, reducing the risk of premature damage to the wall portion 21, which can greatly improve the service life of the battery cell 20.

In some embodiments, the valve body 31 has a valve cavity 313 provided inside. The valve body 31 includes a valve seat 311 and a valve cover 312. The valve cover 312 includes a cover top wall 3121 and a cover side wall 3122 connected to the cover top wall 3121. The cover top wall 3121, the cover side wall 3122 and the valve seat 311 enclose the valve cavity 313. The second weakened zone 3119 is provided on the cover side wall 3122.

In some embodiments, the second weakened zone 3119 includes a plurality of third grooves 3119a provided on the cover side wall 3122.

By providing the third groove 3119a on the cover side wall 3122, the thickness of the zone of the cover side wall 3122 at which the third groove 3119a is located can be reduced, realizing thickness reduction of this zone, thereby realizing the low strength of this zone.

In an embodiment, the third groove 3119a is located on a side of the cover side wall 3122 facing towards the valve cavity 313; and/or the third groove 3119a is located on a side of the cover side wall 3122 facing away from the valve cavity 313. In other words, the third groove 3119a may be provided on both the inner and outer sides of the cover side wall 3122. The third groove 3119a may alternatively be provided only on the inner side of the cover side wall 3122, or the third groove 3119a may be provided only on the outer side of the cover side wall 3122. When the third groove 3119a is provided on both the inner and outer sides, orthographic projections of the third grooves 3119a on both sides on the cover side wall 3122 may be set to at least partially overlap. This arrangement can reduce the thickness of the cover side wall 3122 at both sides, reducing the thickness of the part of the cover side wall 3122 at which the third groove 3119a is provided, realizing thickness reduction, and making it easier to fracture under pressure.

In an embodiment, the cover side wall 3122 has a second through hole 31221 running through the cover side wall 3122. The third groove 3119a is provided on a connecting arm between two adjacent second through holes 31221. A plurality of second through holes 31221 may be provided, and the plurality of second through holes 31221 are spaced apart in the circumferential direction of the cover side wall 3122. The arrangement of the second through hole 31221 can cause partial physical loss of the cover side wall 3122, which reduces the strength of the cover side wall 3122 to a certain extent. On this basis, the third groove 3119a is further provided, making the wall portion 21 more likely to fracture under pressure.

As shown in FIG. 5, the third groove 3119a may be provided on the connecting arm between two adjacent second through holes 31221. The third groove 3119a may extend along the circumferential direction of the valve cover 312 and may extend to two ends of the connecting arm.

In an embodiment, the second weakened zone 3119 includes a first score groove, and the first score groove is a circumferential groove surrounding the cover side wall 3122.

As shown in FIG. 5, due to the arrangement of the second through hole 31221, in an axial direction Y of the valve cavity 313, the cover side wall 3122 includes a solid zone 3122a and a ventilation zone 3122b. In the circumferential direction of the valve cavity 313, the cover side wall 3122 of the ventilation zone 3122b is provided with the second through hole 31221. The cover side wall 3122 is discontiguous, while the cover side wall 3122 of the solid zone 3122a is a contiguous solid structure. Therefore, the second weakened zone 3119 may also be provided on the cover side wall 3122 of the solid zone 3122a. Specifically, the second weakened zone 3119 includes the first score groove, and the first score groove is a circumferential groove on the cover side wall 3122.

In other embodiments, discontiguous grooves may alternatively be provided in the circumferential direction of the cover side wall 3122. Specifically, the second weakened zone 3119 includes a plurality of second score grooves, and the plurality of second score grooves are spaced apart in the circumferential direction of the cover side wall 3122. That is, a plurality of discontiguous grooves may be provided on the cover side wall 3122 of the solid zone 3122a.

Refer to FIG. 3, FIG. 4 and FIG. 6. The one-way valve 30 in this application may not include the second weakened zone 3119, or may include the second weakened zone 3119, which can be selected as needed. In some embodiments, two types of one-way valves 30 may alternatively be provided on the same battery cell 20.

Referring to FIG. 1 and FIG. 2, the wall portion 21 with the first weakened zone 212 plays a certain pressure relief role to a certain extent. The one-way valve 30 with the second weakened zone 3119 can also play a pressure relief role. Therefore, when this structure is selected, the battery cell 20 may not be provided with a pressure relief mechanism. Certainly, when the wall portion 21 with the first weakened zone 212 and the one-way valve 30 with the second weakened zone 3119 are selected, a pressure relief mechanism may alternatively be provided on the battery cell 20.

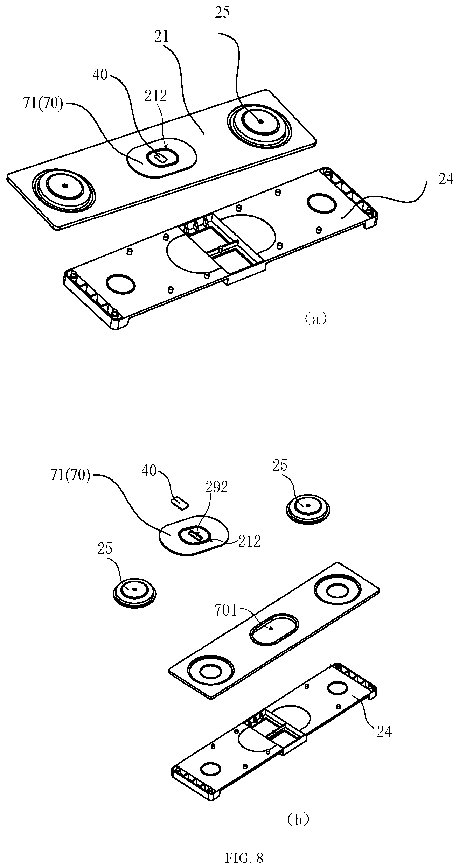

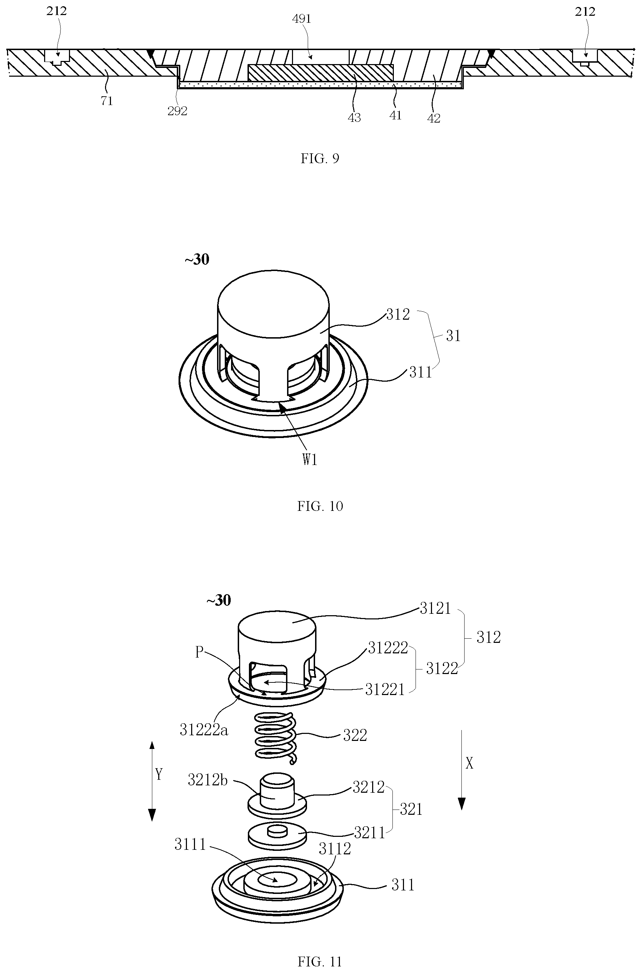

Referring to FIG. 8 and FIG. 9, FIG. 8 is a partial schematic structural exploded view of a battery cell according to one or more embodiments. FIG. 9 is a partial schematic cross-sectional structural diagram of a battery cell according to one or more embodiments. In an embodiment, the wall portion 21 includes a pressure relief mechanism 70 and a pressure relief hole 701. The pressure relief hole 701 communicates the interior of the housing with the exterior of the housing. The pressure relief mechanism 70 includes a pressure relief sheet 71. The pressure relief sheet 71 covers the pressure relief hole 701. The first weakened zone 212 is provided on the pressure relief sheet 71. The pressure relief mechanism 70 is configured to actuate and relieve an internal pressure of the battery cell 20 when the battery cell 20 is thermally runaway. An actuation pressure of the pressure relief mechanism 70 is greater than an actuation pressure of the first weakened zone 212.

The actuation pressure of the pressure relief mechanism 70 is set to be greater than the actuation pressure of the first weakened zone 212. Through this arrangement, when the battery cell 20 undergoes thermal runaway, gas inside the housing of the battery cell 20 increases rapidly to open the pressure relief mechanism 70 for pressure relief. However, gas generated inside the housing 21 during normal use of the battery cell 20 can be discharged through the exhaust assembly, but cannot open the pressure relief mechanism 70. Further, during thermal runaway, before opening the pressure relief mechanism 70, the exhaust assembly can be broken at the first weakened zone 212 first to perform a certain degree of pressure relief. If the internal air pressure of the battery cell 20 still increases, the pressure relief mechanism 70 is then opened.

In an embodiment, the pressure relief sheet 71 is provided with a second vent hole 292. The second vent hole 292 communicates the interior of the housing with the exhaust assembly 90. The exhaust assembly 90 includes the gas-permeable membrane assembly 40. The gas-permeable membrane assembly 40 is arranged on the pressure relief sheet 71 and covers the second vent hole 292. Through this arrangement, gas generated inside the housing 21 during normal use of the battery cell 20 can be discharged through the gas-permeable membrane assembly 40. During thermal runaway, before opening the pressure relief mechanism 70, the gas-permeable membrane assembly 40 can be broken at the first weakened zone 212 first to perform a certain degree of pressure relief. If the internal air pressure of the battery cell 20 still increases, the pressure relief mechanism 70 is then opened for pressure relief.

According to some embodiments of this application, when the valve body 31 of the one-way valve 30 is arranged on the outer surface 21a of the wall portion and at least part of the valve body 31 protrudes from the outer surface 21a, that is, when the one-way valve 30 is arranged on a side of the wall portion facing towards the exterior of the housing, various one-way valves 30 with different structures can be provided.

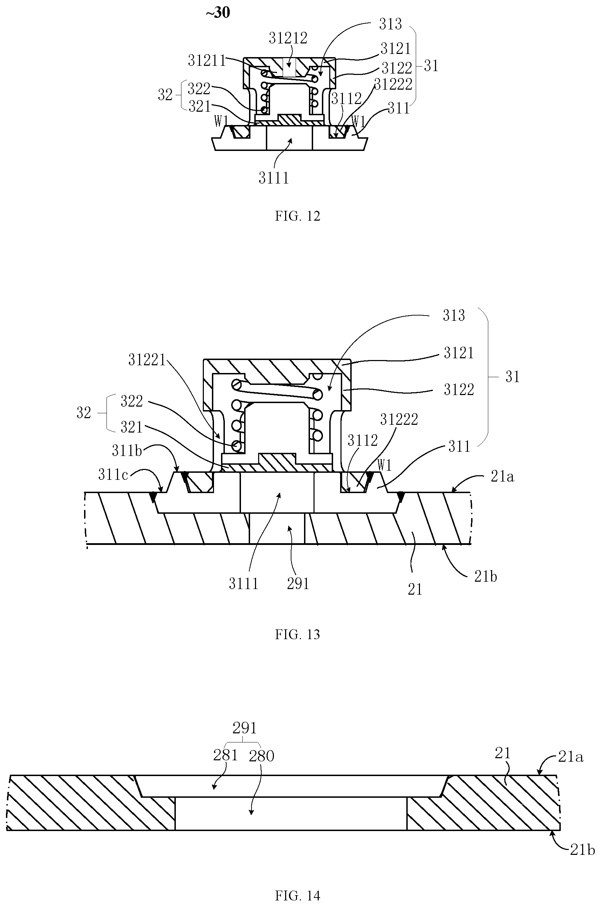

Referring to FIG. 10, FIG. 11, FIG. 12 and FIG. 13, FIG. 10 is a front view of a one-way valve according to one or more embodiments. FIG. 11 is a schematic structural exploded view of a one-way valve according to one or more embodiments. FIG. 12 is a schematic cross-sectional structural diagram of a one-way valve according to one or more embodiments. FIG. 13 is a partial schematic cross-sectional structural diagram of a battery cell according to one or more embodiments. In an embodiment, the valve body 31 includes a valve seat 311 and a valve cover 312. The valve cover 312 includes a cover top wall 3121 and a cover side wall 3122 connected to the cover top wall 3121. The cover top wall 3121, the cover side wall 3122 and the valve seat 311 enclose the valve cavity 313. The valve seat 311 is provided with a gas inlet 313a. The valve cover 312 is provided with a gas outlet 313b. This arrangement facilitates discharge of gas.

In this embodiment, the valve body 31 of the one-way valve 30 is provided with the valve seat 311 and the valve cover 312. The one-way valve 30 with this structure divides the valve body 31 into two parts, thereby facilitating the assembly of the valve core 32 into the valve cavity 313, which is beneficial to reducing the assembly difficulty of the one-way valve 30.

According to some embodiments of this application, the valve seat 311 has a first through hole 3111 running through the valve seat 311. The gas inlet 313a is the first through hole 3111, that is, the first through hole 3111 is used as the gas inlet 313a of the valve cavity 313. This arrangement facilitates outward transmission of gas inside the battery cell 20.

According to some embodiments of this application, the cover side wall 3122 has a second through hole 31221 running through the cover side wall 3122. The gas outlet 313b is the second through hole 31221, that is, the second through hole 31221 is used as the gas outlet 313b of the valve cavity 313. This arrangement facilitates outward transmission of gas inside the battery cell 20.

According to some embodiments of this application, along a direction leaving the cover top wall 3121, the second through hole 31221 extends to an end portion of the cover side wall 3122.

As shown in FIG. 11, the direction leaving the cover top wall 3121 is a direction from the cover top wall 3121 to the valve seat 311 (direction X in the figure). The second through hole 31221 is formed by removing a partial structure of the cover side wall 3122. Along the direction X, the cover side wall 3122 is directly hollowed out to the bottom end of the cover side wall 3122.

In an embodiment, along an axial direction of the valve cavity 313 (direction Y in the figure), a sealing interface between the valve core 32 and the valve seat 311 is higher than or flush with the bottom wall of the second through hole 31221. Along the direction X, a lower opening surface of the second through hole 31221 may be flush with the sealing surface between the blocking member 321 and the valve seat 311. That is, the sealing interface is higher than or flush with the bottom wall of the second through hole 31221. The so-called bottom wall of the second through hole 31221 refers to a lowest part of the second through hole 31221. As shown by the arrow P in FIG. 11, along the direction X, the lower opening surface of the second through hole 31221 is the bottom wall of the second through hole 31221. Through this arrangement, when the one-way valve 30 is opened for ventilation, that is, when the blocking member 321 opens the sealing interface, an electrolyte liquid carried out with gas can be discharged outward in time, so that the electrolyte is not easy to accumulate at the outer edge of the blocking member 321, thereby effectively ensuring the sealing and repeated opening function of the one-way valve 30.

According to some embodiments of this application, a plurality of second through holes 31221 are provided, and the plurality of second through holes 31221 are spaced apart in a circumferential direction of the cover side wall 3122. Through this arrangement, when the one-way valve 30 is opened for ventilation, gas can be discharged more quickly, shortening the ventilation time, that is, shortening the time the housing of the battery cell 20 is in an open state, so as to reduce the intrusion of external water vapor into the battery cell 20 system during valve opening.

Refer to FIG. 12. According to some embodiments of this application, a first guide post 31211 is convexly provided on a side of the cover top wall 3121 facing towards the valve cavity 313. The cover top wall 3121 has a third through hole 31212 running through the cover top wall 3121 and the first guide post 31211, or the cover top wall 3121 has a third through hole 31212 running through the cover top wall 3121. The gas outlet 313b is the third through hole 31212.

Specifically, the first guide post 31211 is convexly provided on the side of the cover top wall 3121 facing towards the valve cavity 313. The cover top wall 3121 has the third through hole 31212 running through the cover top wall 3121 and the first guide post 31211. The gas outlet 313b is the third through hole 31212. That is, the third through hole 31212 is used as the gas outlet 313b of the valve cavity 313. This arrangement facilitates outward transmission of gas inside the battery cell 20.

Still refer to FIG. 10, FIG. 11, FIG. 12 and FIG. 13. According to some embodiments of this application, the valve cover 312 further includes a flanging wall 31222. The cover side wall 3122 connects the cover top wall 3121 and the flanging wall 31222. The flanging wall 31222 extends relative to the cover side wall 3122 toward a side leaving the valve cavity 313. The flanging wall 31222 is connected to the valve seat 311.

According to some embodiments of this application, the valve cover 312 is connected to the valve seat 311. Specifically, a side of the valve seat 311 facing towards the valve cover 312 is provided with a first sinking groove 3112 recessed relative to a surface of the valve seat 311. At least part of the flanging wall 31222 is accommodated in the first sinking groove 3112 and connected to the valve seat 311.

In this embodiment, by providing the first sinking groove 3112 on the side of the valve seat 311 facing towards the valve cover 312, and making at least part of the flanging wall 31222 be accommodated in the first sinking groove 3112, the one-way valve 30 with this structure can save the space occupied by the valve body 31 in the thickness direction of the end cover 21 on the one hand, and can improve the structural stability of the valve cover 312 assembled on the valve seat 311 on the other hand.

According to some embodiments of this application, the flanging wall 31222 is accommodated in the first sinking groove 3112 and connected to the valve seat 311. The thickness of the flanging wall 31222 is less than or equal to the depth of the first sinking groove 3112, so that after the flanging wall 31222 is connected to the valve seat 311, the surface of the flanging wall 31222 facing towards the cover top wall 3121 is flush with the surface of the valve seat 311 facing towards the valve cover 312; or the surface of the flanging wall 31222 facing towards the cover top wall 3121 is lower than the surface of the valve seat 311 facing towards the valve cover 312. As shown in FIG. 12 and FIG. 13, after the valve cover 312 is connected to the valve seat 311, the surfaces of the flanging wall 31222 and the valve seat 311 are flush. Through this arrangement, the overall installation height of the one-way valve 30 can be reduced.

According to some embodiments of this application, the valve seat 311 may be made of a metal material, such as copper, iron, aluminum, steel or aluminum alloy. Similarly, the valve cover 312 may also be made of a metal material, such as copper, iron, aluminum, steel or aluminum alloy. The valve seat 311 and the valve cover 312 may be of the same material or different materials. The valve cover 312 and the valve seat 311 may be assembled by welding (such as laser welding); or may alternatively be assembled by mechanical interference fit, but a static friction force generated by the interference fit must be greater than a rebound force of the elastic member 322.

According to some embodiments of this application, the flanging wall 31222 is welded to the valve seat 311; where in the circumferential direction of the cover side wall 3122, at least part of a first weld mark W1 of the flanging wall 31222 and the valve seat 311 is staggered from the second through hole 31221 on the cover side wall 3122.

The flanging wall 31222 is an annular component with a certain thickness. An outer peripheral surface of the flanging wall 31222 is used as a connecting surface 31222a to be welded to a groove wall surface of the first sinking groove 3112. Further, the connecting surface 31222a of the flanging wall 31222 may be set as an inclined surface, and accordingly the groove wall surface of the first sinking groove 3112 is also set as an inclined surface, so that the connecting surface 31222a of the flanging wall 31222 fits with the groove wall surface of the first sinking groove 3112. As shown in FIG. 12 and FIG. 13, the flanging wall 31222 and the first sinking groove 3112 may form a fitting structure. In this way, the welding quality can be improved and the strength and stability of the connection can be enhanced. Furthermore, it is preferred that the valve cover 312 and the valve seat 311 are made of the same material to achieve better welding quality.

According to some embodiments of this application, in the circumferential direction of the cover side wall 3122, at least part of the first weld mark W1 between the flanging wall 31222 and the valve seat 311 is staggered from the second through hole 31221. As shown in FIG. 10, a position on the cover side wall 3122 where no second through hole 31221 is opened can be selected for welding. A plurality of first weld marks W1 may be provided, and the plurality of first weld marks W1 are distributed in the circumferential direction of the cover side wall 3122. The first weld marks W1 may be staggered from the second through holes 31221 in terms of distribution. That is, the plurality of second through holes 31221 are provided spaced apart in the circumferential direction of the cover side wall 3122. Solid walls are provided at positions between adjacent second through holes 31221 where no holes are opened. Welding is performed at places with solid walls. The first weld mark W1 herein is to express the welding point or welding position between the flanging wall 31222 and the valve seat 311, and does not mean that there must be a welding mark in the actual product. Whether there is a mark depends on the welding process and should not be limited to necessarily having a mark. In this way, the solid wall has a certain heat blocking effect, which can protect the blocking member 321 of the valve core 32, reduce the impact of high temperature during welding on the blocking member 321, so as to prevent the blocking member 321 from deforming due to heat, where such deformation in turn causes the sealing interface to fail when the valve is not opened.

According to some embodiments of this application, the valve core 32 may include an elastic member 322 and a blocking member 321. The elastic member 322 is arranged in the valve cavity 313. The blocking member 321 is movably arranged in the valve cavity 313. The blocking member 321 is configured to block the gas inlet under the action of the elastic member 322 and is configured to open the gas inlet under the action of the gas inside the housing.

Specifically, the elastic member 322 is arranged in the valve cavity 313. The blocking member 321 is movably arranged in the valve cavity 313. The elastic member 322 is configured to provide an elastic force to the blocking member 321. The sealing and opening of the valve cavity 313 are realized by the deformation of the elastic member 322.

The blocking member 321 is movably arranged in the valve cavity 313, that is, the blocking member 321 can move in the valve cavity 313, so that when the blocking member 321 moves close to the gas inlet 313a, the gas inlet 313a is blocked. Conversely, when the blocking member 321 moves away from the gas inlet 313a, the gas inlet 313a is opened.

In some embodiments, the blocking member 321 is clearance-fitted with the inner wall of the valve cavity 313.

Optionally, the elastic member 322 is an elastic component, and its structure can be various, such as an elastic sheet, a spring or elastic rubber. For example, the elastic member 322 is a spring. Using a spring as the elastic member arranged in the valve cavity, on the one hand, is convenient to assemble the elastic member, which is beneficial to reducing the difficulty of assembling the elastic member in the valve cavity; and on the other hand, can realize a relatively stable direction in which the elastic member applies an elastic force to the blocking member. In some embodiments, a material of the elastic member includes steel, iron or aluminum. The elastic member made of steel, iron or aluminum has good toughness and can alleviate the phenomenon of elastic failure of the elastic member, which is beneficial to improving the service life of the elastic member.

In some embodiments, the blocking member 321 is configured to block the gas inlet 313a under the action of the elastic member 322 and is configured to open the gas inlet 313a under the action of the gas inside the housing. That is to say, the elastic member 322 can provide an elastic force for the blocking member 321, so that the blocking member 321 can abut against a cavity bottom surface of the valve cavity 313 to block the gas inlet 313a. Conversely, when a force of gas inside the housing acting on the blocking member 321 is greater than an elastic force of the elastic member 322, the gas inside the housing can overwhelm the elastic force of the elastic member 322 and push the blocking member 321 to separate from the cavity bottom surface of the valve cavity 313, so as to realize that the blocking member 321 opens the gas inlet 313a, so that the gas inside the housing can enter the valve cavity 313 through the gas inlet 313a and then be discharged through the gas outlet 313b.

Further, the blocking member 321 includes a pressing portion 3212 and a sealing portion 3211. Along an axial direction of the valve cavity 313, two ends of the elastic member respectively abut against the valve cover and the pressing portion. The sealing portion is connected to a side of the pressing portion facing away from the valve cover. The sealing portion is configured to block the gas inlet channel.

The rigidity of the pressing portion 3212 is greater than the rigidity of the sealing portion 3211. The sealing portion 3211 is connected to a side of the pressing portion 3212 facing away from the cover top wall 3121. The sealing portion 3211 is configured to block the gas inlet 313a. The elastic member 322 is arranged between the cover top wall 3121 and the pressing portion 3212. The pressing portion 3212 can be pressed against the sealing portion 3211 under the elastic force of the elastic member 322, so that an upper surface of the sealing portion 3211 is in effective contact with the pressing portion 3212, and the sealing portion 3211 abuts against the cavity bottom surface of the valve cavity 313, thereby blocking the gas inlet 313a through the sealing portion 3211.

According to some embodiments of this application, the rigidity of the pressing portion 3212 is greater than the rigidity of the sealing portion 3211. The arrangement of the pressing portion 3212 can effectively transmit the force applied by the elastic member to the sealing portion 3211. In other words, the rigidity of the pressing portion is greater than the rigidity of the sealing portion, that is, the deformation resistance of the pressing portion is greater than the deformation resistance of the sealing portion, so that the pressing portion can better press the sealing portion against the cavity bottom surface of the installation cavity to block the gas inlet. For example, the pressing portion can be made of various materials, such as steel, iron or aluminum. Similarly, the sealing portion can also be made of various materials, such as rubber, silicone or plastic.

Optionally, a connection structure between the pressing portion and the sealing portion can be various, such as snap connection, bolt connection or bonding.

By disposing the blocking member to include the two parts: the pressing portion and the sealing portion, the pressing portion is arranged on the side of the sealing portion facing towards the valve cover, the sealing portion is configured to block the gas inlet, and the two ends of the elastic member respectively abut against the valve cover and the pressing portion, so that the elastic member can apply the elastic force on the sealing portion through the pressing portion. This is beneficial to improving the uniformity of the elastic force of the elastic member applied on the sealing portion, thereby effectively improving the sealing effect of the sealing portion on the gas inlet.

According to some embodiments of this application, the material of the sealing portion 3211 is selected from materials that can withstand electrolyte, such as fluororubber, PFA, or EPDM. Different sealing materials have different physical properties, and forces required to achieve sealing are also different.

Referring to FIG. 14, FIG. 14 is a schematic cross-sectional structural diagram of a wall portion according to one or more embodiments. According to some embodiments of this application, the one-way valve 30 is arranged on the wall portion. The one-way valve 30 may be arranged on the end cover 21. The end cover 21 is provided with a first exhaust hole 291. The first exhaust hole 291 includes a through-hole section 280 and a first hole section 281. The through-hole section 280 and the first hole section 281 are arranged along a thickness direction of the end cover 21. The through-hole section 280 communicates the interior of the housing with the exterior of the housing. The first hole section 281 is located on a side of the through-hole section 280 facing away from the interior of the housing. An aperture of the first hole section 281 is larger than an aperture of the through-hole section 280. The one-way valve 30 is at least partially accommodated in the first hole section 281.

The first exhaust hole 291 is a counterbore recessed relative to the outer surface 21a of the end cover 21. When the one-way valve 30 is connected to the end cover 21, a partial structure of the one-way valve 30 can be embedded in the first exhaust hole 291 to reduce the installation height.

Referring to FIG. 13, according to some embodiments of this application, a first step surface 311b and a second step surface 311c are provided on a side of the valve seat 311 facing towards the valve cover 312. The first step surface 311b is closer to the valve cover 312 than the second step surface 311c. The first sinking groove 3112 is provided on the first step surface 311b.

The first hole section 281 includes a circumferentially arranged hole side surface. The outer peripheral surface of the valve cover 312/valve seat 311 of the one-way valve 30 is welded to the hole side surface. The outer peripheral surface of the second step surface 311c is welded to the hole side surface.

According to some embodiments of this application, the hole side surface fits with the outer peripheral surface of the valve cover 312/valve seat 311 of the one-way valve 30, and both the hole side surface and the outer peripheral surface of the valve cover 312/valve seat 311 of the one-way valve 30 are arranged at an acute angle with the central axis of the first exhaust hole 291. Through this arrangement, the connection strength can be enhanced.

According to some embodiments of this application, the one-way valve 30 is welded to the end cover 21. As shown in FIG. 13, the valve seat 311 of the one-way valve 30 can be welded to the end cover 21. Specifically, the valve cover 312 of the one-way valve 30 is connected to the valve seat 311, and the valve seat 311 is welded to the end cover 21. In other embodiments, the valve seat 311 of the one-way valve 30 may alternatively be connected to the valve cover 312, and the valve cover 312 is welded to the end cover 21.

According to some embodiments of this application, a stress relief groove is provided around a third weld mark between the valve cover 312/valve seat 311 and the end cover 21. The stress relief groove may be provided only on the end cover 21, or the stress relief groove may be provided only on the valve cover 312/valve seat 311, or the stress relief groove may be provided on both the end cover 21 and the valve cover 312/valve seat 311 at the same time. Optionally, a first stress relief groove is provided on a side surface of the valve seat 311/valve cover 312 facing towards an exterior of the housing; and/or a second stress relief groove is provided on a side surface of the wall portion facing towards an exterior of the housing.

According to some embodiments of this application, the exhaust assembly includes the gas-permeable membrane assembly 40. The gas-permeable membrane assembly 40 includes the gas-permeable membrane 41. The gas-permeable membrane 41 is configured to allow gas inside the battery cell to pass through the gas-permeable membrane for discharge.

According to some embodiments of this application, the gas-permeable membrane assembly 40 includes the gas-permeable membrane 41. The gas-permeable membrane 41 is made of a gas-permeable material and has good permeability, which can allow gas molecules to pass through. By selecting the gas-permeable membrane assembly 40 as the exhaust assembly, the battery cell can discharge internal gas through the gas-permeable membrane 41 while in a closed state, thereby discharging the gas inside the housing of the battery cell out of the housing, so that the air pressure inside the housing of the battery cell is not too high. This reduces the risk of the pressure relief mechanism opening the valve in advance, and can greatly improve the service life of the battery cell.

Further, the gas-permeable membrane 41 also has liquid barrier properties, preventing liquid from passing through. Therefore, it can prevent the overflow of the electrolyte while discharging gas. In addition, the gas-permeable membrane 41 can also prevent external water vapor, dust and impurities from entering the battery cell, thereby protecting the internal environment of the battery cell and effectively improving the reliability of the battery cell. The gas-permeable membrane 41 also has good weather resistance, chemical corrosion resistance, and structural stability. In a case of automotive power battery, it also needs to have oleophobicity. Therefore, the material of the gas-permeable membrane 41 can be selected from polymer materials, such as polytetrafluoroethylene, polypropylene, polyethylene, or polyurethane. In addition, since gas generated inside the battery cell causes an internal pressure to rise rapidly, the gas-permeable membrane needs to have certain mechanical strength and elasticity.

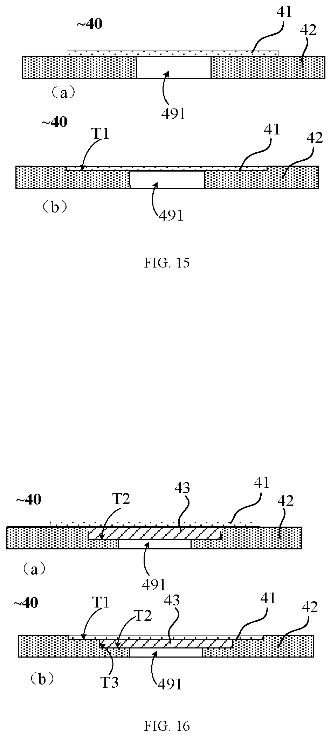

Referring to FIG. 15, FIG. 15 is a schematic cross-sectional structural diagram of a gas-permeable membrane assembly according to one or more embodiments. According to some embodiments of this application, the gas-permeable membrane assembly 40 includes the gas-permeable membrane 41 and a connecting member 42. The connecting member 42 is configured to carry the gas-permeable membrane 41. The connecting member 42 is provided with a first vent hole 491. The gas-permeable membrane 41 is arranged on the connecting member 42. The gas-permeable membrane 41 covers the first vent hole 491. The gas-permeable membrane is configured to allow gas inside the battery cell to pass through the gas-permeable membrane for discharge.

The connecting member 42 can provide support for the gas-permeable membrane 41 and reduce the risk of excessive deformation of the gas-permeable membrane 41. In addition, the connecting member 42 can also serve as a connecting medium for other components of the gas-permeable membrane assembly 40, so that the gas-permeable membrane 41 is connected to other components through the connecting member 42 to improve the stability of the connection. The connecting member 42 is provided with at least one first vent hole 491 as a release channel for gas inside the battery cell, so that the gas can pass through the connecting member 42. The shape of the first vent hole 491 includes geometric shapes such as circle, square, and ellipse. The connecting member 42 may also be provided with a plurality of first vent holes 491. The aperture, shape, and arrangement of the first vent hole 491 are not specifically limited here. Optionally, the aperture of the first vent hole 491 may be less than or equal to the aperture of the vent hole on the battery cell.

In an embodiment, the connecting member 42 may be a metal member, a resin member, or the like. The metal member may be made of copper, iron, aluminum, steel or aluminum alloy, or the like. Selecting the connecting member 42 as a metal member is beneficial for welding the connecting member 42 to the wall portion. The following will describe the solution of this application by taking the connecting member 42 as a metal member 42 as an example, but is not limited to this. It should not limit the solution of this application. Connecting members of non-metallic materials are also applicable.

As shown in (a) of FIG. 15, the gas-permeable membrane 41 may be directly arranged on the surface of the metal member 42. In other embodiments, a recessed step may alternatively be provided on the metal member 42.

Referring to (b) of FIG. 15, according to some embodiments of this application, the metal member 42 has a first annular land T1 recessed relative to a surface of the metal member 42. The first annular land T1 is arranged around the first vent hole 491. The gas-permeable membrane 41 is arranged on the first annular land T1. Through this arrangement, the installation height of the gas-permeable membrane assembly 40 can be reduced.

Referring to FIG. 16, FIG. 16 is a schematic cross-sectional structural diagram of a gas-permeable membrane assembly 40 according to one or more embodiments. According to some embodiments of this application, the gas-permeable membrane assembly 40 further includes a backing member 43. The backing member 43 is arranged between the gas-permeable membrane 41 and the metal member 42. The gas permeability rate of the backing member 43 is greater than the gas permeability rate of the gas-permeable membrane 41.

The gas-permeable membrane assembly 40 includes the gas-permeable membrane 41, the metal member 42 and the backing member 43. The gas-permeable membrane 41 is arranged on the metal member 42. The backing member 43 is arranged between the gas-permeable membrane 41 and the metal member 42. The backing member 43 is configured to support the gas-permeable membrane 41 and allow gas passing through the gas-permeable membrane 41 to pass through.

The backing member 43 can provide support for the gas-permeable membrane 41 and reduce the risk of deformation of the gas-permeable membrane 41. The backing member 43 is made of a material with better gas permeability than the gas-permeable membrane 41, so as not to affect the gas permeability process of the gas-permeable membrane 41. The backing member 43 also has characteristics such as corrosion resistance and high temperature resistance. The backing member 43 can be made of rich materials, including polypropylene, polyamide, polytetrafluoroethylene, polyperfluoroethylene propylene, and other porous polymers, as well as metal-organic framework porous materials, carbon membrane, ceramic porous materials, and the like, which are not limited here.

As shown in (a) of FIG. 16, the metal member 42 further has a second annular land T2 recessed relative to the surface of the metal member 42. The second annular land T2 is arranged around the first vent hole 491. The backing member 43 is arranged on the second annular land T2. The second annular land T2 is configured to carry the backing member 43, while the gas-permeable membrane 41 can be directly attached to the surface of the metal member 42. In this case, because the gas-permeable membrane 41 has a small thickness, it has relatively little impact on the overall height of the gas-permeable membrane assembly 40. By reducing recessed surfaces arranged on the metal member 42, on the one hand, the manufacturing process can be simplified, and on the other hand, the strength of the metal member 42 can be improved.

As shown in (b) of FIG. 16, the metal member 42 has the first annular land T1 and the second annular land T2 recessed relative to the surface of the metal member 42, as well as a transition surface T3. The first annular land T1 is arranged around the second annular land T2. The transition surface T3 connects the first annular land T1 and the second annular land T2. The first annular land T1 is closer to the surface of the metal member 42 than the second annular land T2. The second annular land T2 is arranged around the first vent hole 491. The backing member 43 is arranged on the second annular land T2. The gas-permeable membrane 41 is arranged on the first annular land T1.

The first annular land T1 and the second annular land T2 are formed by inward recessing from the surface of the metal member 42. The metal member 42 may be stamped to form the recessed first annular land T1 and second annular land T2, or the metal member 42 may be etched to remove a partial structure to form the recessed first annular land T1 and second annular land T2. The recess depth of the first annular land T1 and the second annular land T2 relative to the surface of the metal member 42 can be set according to the thicknesses of the gas-permeable membrane 41 and the backing member 43. Preferably, the recess depth of the second annular land T2 relative to the first annular land T1 (that is, the height of the transition surface T3) is equal to the thickness of the backing member 43, so that the second annular land can accommodate the backing member 43, and the surface of the backing member 43 facing towards the gas-permeable membrane 41 is flush with the first annular land T1. Further, the recess depth of the first annular land T1 relative to the surface of the metal member 42 is equal to the thickness of the gas-permeable membrane 41, so that the first annular land can accommodate the gas-permeable membrane 41, and the surface of the gas-permeable membrane 41 farther away from the metal member 42 is flush with the surface of the metal member 42.

By providing the recessed step recessed on the metal member 42, the surface of the gas-permeable membrane 41 can be flush with the surface of the metal member 42, reducing the overall height of the gas-permeable membrane assembly 40, thereby reducing the installation height of the gas-permeable membrane assembly 40.

In an embodiment, the gas-permeable membrane 41 is compositely connected to the metal member 42. For example, the gas-permeable membrane 41 and the metal member 42 can be connected by using a nano injection molding process. Nano injection molding refers to nano molding technology (NMT, namely Nano Molding Technology), which is a process in which metal and plastic are combined with nanotechnology. That is, after the metal surface is nano-treated, the plastic is directly injection molded on the metal surface, allowing the metal and plastic to be integrally molded and finally combined into one product. The "nano" here refers to a microporous process, that is, the metal surface is subjected to nano-scale microporous treatment through a specific solution. The main purpose is to make the metal surface better combine with the plastic so as to improve the connection strength.

According to some embodiments of this application, the gas-permeable membrane assembly 40 is arranged on the wall portion. The wall portion has a first recessed step S1 recessed relative to the surface of the wall portion. The first recessed step S1 is arranged around the second vent hole 292. The gas-permeable membrane assembly 40 is at least partially located on the first recessed step S1. The gas-permeable membrane assembly 40 may be arranged on the end cover 21.

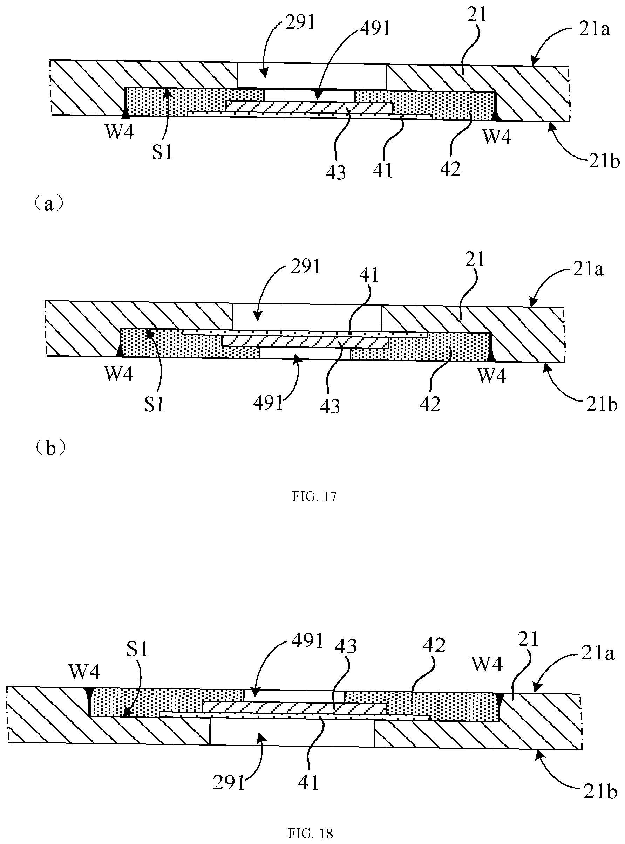

Referring to FIG. 17 and FIG. 18, FIG. 17 is a partial schematic cross-sectional structural diagram of a battery cell 20 according to one or more embodiments. FIG. 18 is a partial schematic cross-sectional structural diagram of a battery cell 20 according to one or more embodiments. According to some embodiments of this application, the end cover 21 has a first recessed step S1 recessed relative to the surface of the end cover 21. The first recessed step S1 is arranged around the second vent hole 292. At least part of the gas-permeable membrane assembly 40 is arranged on the first recessed step S1.

The end cover 21 includes an outer surface 21a and an inner surface 21b arranged opposite to each other. The outer surface 21a is arranged toward the exterior of the housing, and the inner surface 21b is arranged toward the interior of the housing. The gas-permeable membrane assembly 40 may be arranged on the side of the end cover 21 facing towards the interior of the housing, or may be arranged on the side of the end cover 21 facing towards the exterior of the housing.

As shown in (a) and (b) of FIG. 17, the gas-permeable membrane assembly 40 is arranged on the side of the end cover 21 facing towards the interior of the housing. The end cover 21 has an outer surface 21a and an inner surface 21b arranged opposite to each other. The outer surface 21a is arranged toward the exterior of the housing, and the inner surface 21b is arranged toward the interior of the housing. The end cover 21 has a first recessed step S1 recessed relative to the inner surface 21b of the end cover 21.

Specifically, the first recessed step S1 is recessed relative to the inner surface 21b of the end cover 21, and the gas-permeable membrane assembly 40 is arranged on the first recessed step S1. Optionally, the gas-permeable membrane assembly 40 may be connected to the end cover 21 through the metal member 42.

The first recessed step S1 is formed by recessing in a direction from the inner surface 21b of the end cover 21 to the outer surface 21a of the end cover 21. It may be formed by stamping the end cover 21 to create the recessed first recessed step S1, or by etching the end cover 21 to remove a partial structure to form the recessed first recessed step S1. The recess depth of the first recessed step S1 relative to the inner surface 21b of the end cover 21 may be set according to the thickness of the gas-permeable membrane assembly 40. The thickness of the gas-permeable membrane assembly 40 is the overall thickness including the gas-permeable membrane 41, the metal member 42 and the backing member 43. As mentioned above, the gas-permeable membrane 41 and the backing member 43 can be accommodated in the annular land on the metal member 42 recessed relative to the surface of the metal member 42, that is, the overall thickness of the gas-permeable membrane assembly 40 can be equal to the thickness of the metal member 42. Preferably, the recess depth of the first recessed step S1 relative to the inner surface 21b of the end cover 21 is equal to the thickness of the gas-permeable membrane assembly 40, so that the gas-permeable membrane assembly 40 is accommodated in the first recessed step S1, and the surface of the gas-permeable membrane assembly 40 facing towards the interior of the housing is flush with the inner surface 21b of the end cover 21. In this way, the installation height of the gas-permeable membrane assembly 40 can be reduced, thereby reducing the occupation of the internal space of the housing of the battery cell 20, and improving the space utilization rate inside the housing.

As shown in (a) of FIG. 17, the gas-permeable membrane 41 may be arranged on the side of the metal member 42 facing towards an interior of the housing. Through this arrangement, the influence of the external working environment of the battery cell 20 on the gas-permeable membrane 41 can be reduced. As shown in (b) of FIG. 17, the gas-permeable membrane 41 may also be arranged on the side of the metal member 42 facing towards the end cover 21, that is, the gas-permeable membrane 41 is arranged between the metal member 42 and the end cover 21. Through this arrangement, the assembly of the gas-permeable membrane assembly 40 can be facilitated.

As shown in FIG. 18, the gas-permeable membrane assembly 40 is arranged on the side of the end cover 21 facing towards an exterior of the housing. Specifically, the first recessed step S1 is recessed relative to the outer surface 21a of the end cover 21. The gas-permeable membrane assembly 40 is arranged on the first recessed step S1, and is connected to the end cover 21 through the metal member 42. In this embodiment, the first recessed step S1 is formed by recessing in a direction from the outer surface 21a of the end cover 21 to the inner surface 21b of the end cover 21. Similarly, the recess depth of the first recessed step S1 relative to the outer surface 21a of the end cover 21 may be equal to the thickness of the gas-permeable membrane assembly 40.

As shown in FIG. 18, the gas-permeable membrane 41 is arranged on the side of the metal member 42 facing towards an interior of the housing, that is, the gas-permeable membrane 41 is arranged between the end cover 21 and the metal member 42. Through this arrangement, the influence of the external working environment of the battery cell 20 on the gas-permeable membrane 41 can be reduced. In other embodiments, the gas-permeable membrane 41 may alternatively be arranged on the side of the metal member 42 facing towards an exterior of the housing.

According to some embodiments of this application, the connecting member is welded to the wall portion. Optionally, a stress relief groove is provided around a fourth weld mark between the connecting member and the wall portion. Optionally, a third stress relief groove is provided on a connecting member around a fourth weld mark between the connecting member and the wall portion; and/or a second stress relief groove is provided on the wall portion around a fourth weld mark between the connecting member and the wall portion.

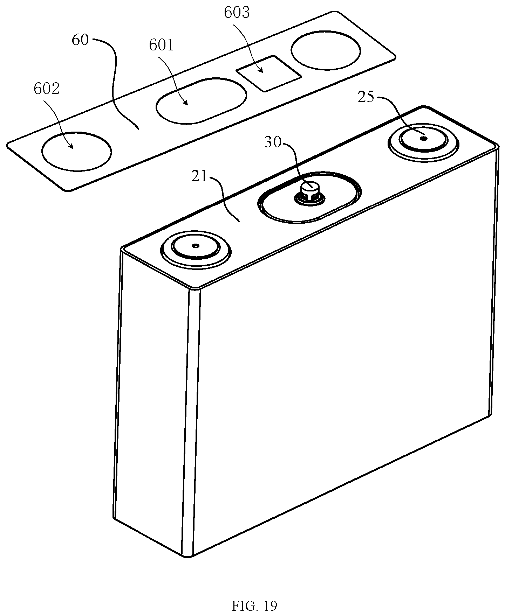

Referring to FIG. 19, FIG. 19 is a schematic structural exploded view of a battery cell according to one or more embodiments. According to some embodiments of this application, the battery cell 20 further includes a protective patch 60, and the protective patch 60 is arranged on the side of the end cover 21 facing towards the exterior of the housing. That is, the protective patch 60 is arranged on the outer surface 21a of the end cover 21 to provide a certain protective effect on the end cover 21. The protective patch 60 can be made of various materials, such as rubber, silicone or plastic.

According to some embodiments of this application, the protective patch 60 is provided with a first avoidance hole 601 running through the protective patch 60, and the first avoidance hole 601 is used for the one-way valve 30 in the exhaust assembly to pass through.

According to some embodiments of this application, in an embodiment where an electrode terminal 25 is provided on the end cover 21, referring to FIG. 19, the protective patch 60 is provided with a second avoidance hole 602 at a position corresponding to the electrode terminal 25. The second avoidance hole 602 runs through both sides of the protective patch 60, and the second avoidance hole 602 is used for the electrode terminal 25 to pass through to avoid the electrode terminal 25. For example, two electrode terminals 25 are provided on the end cover 21. Correspondingly, the protective patch 60 is provided with two second avoidance holes 602, and each second avoidance hole 602 is used for one electrode terminal 25 to pass through.

According to some embodiments of this application, the protective patch 60 is provided with an information collection hole 603 running through the protective patch 60, and the information collection hole 603 serves to expose part of the end cover 21, so as to facilitate setting of information code on the end cover 21 or connection to a detection element for sampling or the like.

In some embodiments, the gas permeability rate of the gas-permeable membrane 41 is 3 to 10 mL/day, and can be 3 to 4 mL/day, 5 to 8 mL/day, or 9 to 10 mL/day. By setting the ventilation rate of the gas-permeable membrane 41 to 3 to 10 mL/day, when the battery cell 20 undergoes thermal runaway, it can alleviate the phenomenon that the pressure relief mechanism 70 cannot be actuated and opened due to excessively fast ventilation, so that the pressure relief mechanism 70 can be actuated and stably relieve the internal pressure of the battery cell 20 when the battery cell 20 undergoes thermal runaway, thereby helping to reduce the risk of fire and explosion of the battery cell 20 during thermal runaway. In addition, the air tightness of the system is also considered to prevent the ventilation rate from being too large, which causes the air tightness to deteriorate. This maintains the air tightness of the battery system while discharging gas.

The test method for the ventilation rate of the gas-permeable membrane 41 can be performed with reference to GB/T1038-2000.

According to some embodiments of this application, the opening pressure of the one-way valve is greater than or equal to 0.2 MPa; optionally, greater than or equal to 0.4 MPa; and optionally, greater than or equal to 0.8 MPa. For example, the opening pressure of the valve core can be 0.20 MPa, 0.25 MPa, 0.30 MPa, 0.35 MPa, 0.40 MPa, 0.45 MPa, 0.50 MPa, 0.55 MPa, 0.60 MPa, 0.65 MPa, 0.70 MPa, 0.75 MPa, 0.80 MPa, 0.90 MPa, or 1.00 MPa.

The test method and principle of the opening pressure of the one-way valve can be performed based on the helium leak standard. The helium leak standard is defined as: if the leak rate is less than 10⁻⁶ Pa·m³/s, the system is considered airtight; and if the leak rate is greater than 10⁻⁶ Pa·m³/s, it indicates that the system has gas leakage.

During test, the one-way valve is used to seal the test chamber. Helium is filled into the test chamber, and a helium detector is used to monitor the amount of helium in the environment where the test chamber is located. If helium is detected and the leak rate is greater than 10⁻⁶ Pa·m³/s, it indicates that the test chamber is no longer airtight and helium is leaking out. The helium leak rate is continuously monitored. When the leak rate is greater than 10⁻⁵ Pa·m³/s, it is determined that the one-way valve is opened to release gas, and the pressure of the test chamber at this time is recorded as the opening pressure of the one-way valve.

In some embodiments, the battery cell 20 is an alkali metal battery. For example, it can be a sodium metal battery, a lithium metal battery, a magnesium metal battery, or the like. The use of the alkali metal battery in conjunction with the exhaust assembly can promptly discharge gas generated by the alkali metal battery during normal operation and improve the service life of the alkali metal battery.

The electrode assembly 23 is mainly formed by winding or stacking a positive electrode plate and a negative electrode plate, and a separator is generally provided between the positive electrode plate and the negative electrode plate. The parts of the positive electrode plate and the negative electrode plate with active substances constitute the body portion of the electrode assembly, while the parts of the positive electrode plate and the negative electrode plate without active substances each constitute a tab. A positive tab and a negative tab may both be located at one end of the body portion or be located at two ends of the body portion respectively. During charging and discharging of the battery, a positive electrode active substance and a negative electrode active substance react with an electrolyte, and the tabs are connected to the electrode terminals to form a current loop.

In an embodiment, the positive electrode plate includes a positive electrode current collector and a positive electrode active layer provided on at least one side of the positive electrode current collector, and the positive electrode active layer includes a positive electrode active material.

For example, the positive electrode current collector includes two opposite surfaces in its thickness direction, and the positive electrode active layer is disposed on either or both of the two opposite surfaces of the positive electrode current collector.

In an embodiment, the positive electrode current collector may be a metal foil or a composite current collector. For example, an aluminum foil may be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In an embodiment, the cathode material includes one or more of polyanion-type positive electrode material, phosphate-based positive electrode material, sulfate-based positive electrode material, silicate-based positive electrode material, and borate-based positive electrode material. For example, in a positive electrode active material of a sodium battery, a polyanion compound includes compounds based on phosphate and fluorophosphate. The compound based on phosphate includes Naₓ₁Fe_{y1}Pₘ₁Oₙ₁, for example, sodium iron phosphate with high capacity, and sodium iron pyrophosphate with high voltage platform. The polyanionic compound includes one or more of sodium vanadium trifluorophosphate Na₃V₂(PO₄)₂F₃, sodium vanadium fluorophosphate NaVPO₄F, sodium vanadium phosphate Na₃V₂(PO₄)₃, Na₄Fe₃(PO₄)₂P₂O₇, NaFePO₄, and Na₃V₂(PO₄)₃. The Prussian blue compound is NaₓMM(CN)₆, where M and M are one or more of Fe, Mn, Co, Ni, Cu, Zn, Cr, Ti, V, Zr, Ce, where 0 < x ≤ 2. A positive electrode active material in a lithium metal battery may include at least one of lithium nickel cobalt manganese oxide, lithium nickel cobalt aluminum oxide, lithium iron phosphate, lithium cobalt oxide, lithium manganese oxide, or lithium iron manganese phosphate.

In an embodiment, the negative electrode plate includes a negative electrode current collector and a negative electrode active layer disposed on at least one surface of the negative electrode current collector, where the negative electrode active layer includes a negative electrode active material. In this embodiment, the battery cell is an ion battery, and during charging and discharging of the battery, active ions (such as Li⁺ and Na⁺) are intercalated/deintercalated into/from the negative electrode active material.

For example, the negative electrode current collector includes two opposite surfaces in its thickness direction, and the negative electrode active layer is disposed on either or both of the two opposite surfaces of the negative electrode current collector.

In an embodiment, the negative electrode current collector may be a metal foil or a composite current collector. For example, for the metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In an embodiment, the negative electrode active material may include one or more of silicon-based material, silicon-carbon material, carbon material, and selenium-based material. Specifically, it includes one or more of artificial graphite, natural graphite, hard carbon, soft carbon, silicon-based material, and selenium-based material. The silicon-based material may be selected from one or more of elemental silicon, silicon-oxygen compounds (such as silicon monoxide), silicon-carbon compounds, silicon-nitrogen compounds, and silicon alloys. The selenium-based material may be selected from one or more of elemental selenium, selenium oxide, and selenium alloy.

In an embodiment, the negative electrode plate includes a negative electrode current collector and a carbon-containing coating disposed on at least one surface of the negative electrode current collector. In this embodiment, the battery cell is a metal battery, and during charging and discharging of the battery, active ions are deposited/stripped at the negative electrode plate. The metal battery may be an alkali metal battery, such as one of a lithium metal battery, a sodium metal battery, a potassium metal battery, a zinc metal battery, or an aluminum metal battery. This type of battery may also be referred to as a "negative electrode-free battery." During charging, active ions (for example, Na⁺) deintercalated from the positive electrode active material are deposited onto the negative electrode current collector to form sodium metal. The provision of the carbon-containing coating helps to achieve more uniform metal deposition. The carbon-containing material includes one or more of conductive carbon, graphite, hard carbon, and carbon nanotubes.

In some other embodiments, a conductive film layer may alternatively be deposited on the negative electrode current collector, such as an alloy material, a titanium-based material, an active metal (for example, sodium metal), a carbon-based material deposited with metal, a metal-containing composite material, or a metal-containing alloy material. The foregoing alloy material includes, but is not limited to a sodium-tin alloy, a sodium-germanium alloy, and a sodium-antimony alloy. The foregoing titanium-based material includes, but is not limited to, titanium dioxide, titanate, and titanium phosphate.

In an embodiment, the positive electrode active layer and the negative electrode active layer may further include a binder and a conductive agent. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. For example, the conductive agent may include at least one of superconducting carbon, acetylene black, carbon black, Ketjen black, carbon dots, carbon nanotubes, graphene, and carbon nanofibers.

In an embodiment, the separator may be any well-known porous separator with good chemical stability and mechanical stability.

In an embodiment, a material of the separator may be at least one selected from glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of the same or different materials, which is not particularly limited.

The electrolyte conducts ions between the positive electrode plate and the negative electrode plate. The electrolyte may be in a liquid state, a gel state, or an all-solid state.

In some embodiments, the electrolyte is an electrolyte. The electrolyte includes an electrolytic salt and a solvent. After dissolved, the electrolytic salt generates electrolyte ions, and electrical conduction is achieved via migration of the electrolyte ions in the electrolytic salt.

In an embodiment, in a sodium battery, the electrolytic salt includes a sodium salt such as sodium hexafluorophosphate (NaPF₆), sodium bis(fluorosulfonyl)imide (NaFSI), sodium trifluoromethanesulfonate (CF₃NaO₃S), or sodium sulfide (Na₂S). In a lithium battery, it includes at least one lithium salt selected from lithium perchlorate, lithium hexafluoroarsenate, lithium hexafluorophosphate, lithium bis(trifluoromethanesulfonyl)imide, lithium bis(fluorosulfonyl)imide, lithium difluoro(oxalato)borate, lithium tetrafluoroborate, and lithium trifluoromethanesulfonate.

In an embodiment, the solvent includes one or more of acyclic ether, dimethoxyethane and derivatives thereof, diethylene glycol dimethyl ether, triethylene glycol dimethyl ether, tetraethylene glycol dimethyl ether, and cyclic ether. Specifically, it includes dimethyl ether (DME), diethylene glycol diethyl ether, tetraethylene glycol dimethyl ether, 2,2,2,2-trifluoroethyl ether, ethylene glycol diethyl ether, triethylene glycol dimethyl ether, dimethoxyethane derivative, methyl 2,2,2-trifluoroethyl carbonate (FEMC), dioxolane (DOL), acetonitrile (AN), fluorobenzene, triethyl phosphate (TEP), sulfolane, 2-methyltetrahydrofuran, tetrahydrofuran, dimethyl sulfoxide, and N,N-dimethylacetamide.

In an embodiment, the electrolyte may further contain an additive. For example, the additive may include a negative electrode film-forming additive or a positive electrode film-forming additive, or may include an additive capable of improving some performance of the battery, for example, an additive for improving overcharge performance of the battery, or an additive for improving high-temperature performance or low-temperature performance of the battery.

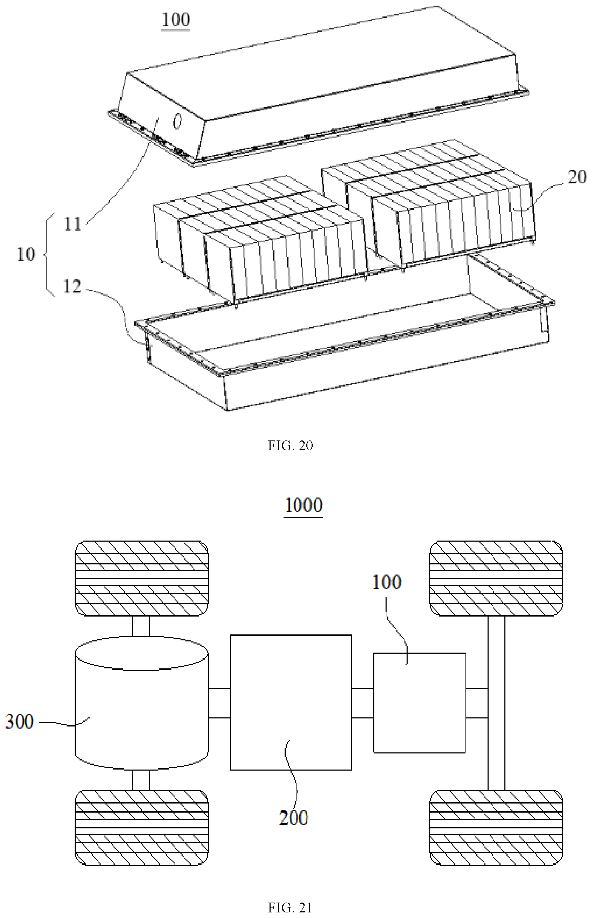

According to some embodiments of this application, this application further provides a battery 100, and the battery 100 includes the battery cell 20 described in any one of the foregoing solutions. Referring to FIG. 20, FIG. 20 is a schematic structural exploded view of a battery according to one or more embodiments. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together such that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 so that the first portion 11 and the second portion 12 jointly define the accommodating space. Alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may be of a variety of shapes, for example, cylinder or cuboid.

In the battery 100, the battery cells 20 are present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 being connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and its specific example includes all types of primary batteries and secondary batteries. For example, it may include different types of secondary batteries such as a lithium battery, a sodium battery, and a potassium battery. The lithium secondary battery may include a lithium metal secondary battery, a lithium-ion secondary battery, a lithium polymer secondary battery, or a lithium-ion polymer secondary battery. It alternatively may be a lithium-sulfur battery, a sodium-ion battery, or a magnesium-ion battery, without being limited thereto. The battery cell 20 may adopt a cylindrical, flat, cuboidal, or another shape.

In some embodiments, the battery may be an energy storage apparatus. Energy storage apparatuses include energy storage containers, energy storage cabinets, and the like.

According to some embodiments of this application, this application further provides an electric device, and the electric device includes the battery cell described in any one of the foregoing solutions, where the battery cell is configured to supply electrical energy to the electric device. The electric device may be any one of the foregoing devices or systems using the battery cell.

In some embodiments, the electric device according to this application is not particularly limited to any purpose, and may be used for any known electronic apparatus in the prior art. The battery disclosed in the embodiments of this application can be applied to electric devices powered by batteries and various energy storage systems using batteries as energy storage elements. That is, an electric device is provided. In some embodiments, the electric device of this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, ships, spacecrafts, lighting appliances, toys, game machines, clocks, electric tools, flash lamps, cameras, large household batteries, lithium-ion capacitors, and the like.

The electric device may select a battery cell, a battery module, or a battery pack according to its application requirements.

Referring to FIG. 21, FIG. 21 is a schematic structural diagram of a vehicle according to one or more embodiments. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

In the above embodiments, by providing the gas-permeable membrane assembly, the battery cell can discharge internal gas through the gas-permeable membrane while in a sealed state, promptly discharging the gas inside the battery housing out of the housing, so that the air pressure inside the battery housing is not too high, reducing the risk of the pressure relief mechanism opening the valve in advance, which can greatly improve the service life of the battery cell. One or more gas-permeable membrane assemblies can be provided on one battery cell, and the installation positions and methods of the gas-permeable membrane assemblies can be different. For example, one gas-permeable membrane assembly is arranged on the side of the end cover facing towards the interior of the battery housing, and one gas-permeable membrane assembly is arranged on the side of the end cover facing towards the exterior of the battery housing. One gas-permeable membrane assembly can be arranged on the end cover, and the other gas-permeable membrane assembly can be arranged on the housing body.

The foregoing descriptions are merely embodiments of this application and are not intended to limit the patent scope of this application. Any equivalent structural or procedural transformations made by using the content of the specification and drawings of this application or any direct or indirect application in other related technical fields are included in the patent protection scope of this application in the same way.

## Claims

1. A battery cell, **characterized by** comprising:
a housing having a wall portion; and
an exhaust assembly disposed on the wall portion, wherein the exhaust assembly comprises a one-way valve and/or a gas-permeable membrane assembly, the gas-permeable membrane assembly comprises a gas-permeable membrane, and the exhaust assembly is configured to discharge gas inside the housing; wherein
the wall portion is provided with a first weakened zone, and the first weakened zone is arranged along a circumferential direction of the exhaust assembly.

2. The battery cell according to claim 1, wherein
the first weakened zone comprises a first thinned zone.

3. The battery cell according to claim 1 or 2, wherein
the first weakened zone comprises a first groove recessed relative to a surface of the wall portion, and the first groove is arranged around the exhaust assembly.

4. The battery cell according to claim 3, wherein
the wall portion has an outer surface and an inner surface arranged opposite to each other, the outer surface is arranged toward an exterior of the housing, and the inner surface is arranged toward an interior of the housing;
the first groove is recessed relative to the outer surface; and/or
the first groove is recessed relative to the inner surface.

5. The battery cell according to claim 1 or 2, wherein
the first weakened zone comprises a plurality of second grooves recessed relative to a surface of the wall portion, and the plurality of second grooves are spaced apart in the circumferential direction of the exhaust assembly.

6. The battery cell according to claim 3, 4 or 5, wherein
the first weakened zone further comprises a score provided at a bottom of the first groove and/or the second groove.

7. The battery cell according to any one of claims 1 to 6, wherein
the wall portion comprises a wall portion body and a sinking portion, the wall portion body has an outer surface and an inner surface arranged opposite to each other, the outer surface is arranged toward the exterior of the housing, and the inner surface is arranged toward the interior of the housing; and the sinking portion is connected to the wall portion body, the sinking portion protrudes from the inner surface, and the first weakened zone is provided on the sinking portion.

8. The battery cell according to any one of claims 1 to 7, wherein
the wall portion is provided with a first exhaust hole, the first exhaust hole communicates the interior of the housing with the exterior of the housing, the exhaust assembly comprises a one-way valve, and the one-way valve covers the first exhaust hole.

9. The battery cell according to claim 8, wherein
the wall portion has the outer surface and the inner surface arranged opposite to each other, the outer surface is arranged toward the exterior of the housing, and the inner surface is arranged toward the interior of the housing; and the one-way valve is arranged on the outer surface, the one-way valve comprises a valve body, and at least part of the valve body protrudes from the outer surface.

10. The battery cell according to claim 9, wherein
the valve body is provided with a second weakened zone, an actuation pressure of the second weakened zone is greater than a valve opening pressure of the one-way valve, and the actuation pressure of the second weakened zone is less than an actuation pressure of the first weakened zone.

11. The battery cell according to claim 10, wherein
the valve body has a valve cavity provided inside, the valve body comprises a valve seat and a valve cover, the valve cover comprises a cover top wall and a cover side wall connected to the cover top wall, the cover top wall, the cover side wall and the valve seat enclose the valve cavity, and the second weakened zone is provided on the cover side wall.

12. The battery cell according to claim 10 or 11, wherein
the second weakened zone comprises a plurality of third grooves provided on the cover side wall.

13. The battery cell according to claim 8, wherein
the one-way valve comprises a valve body and a valve core, the valve body has a valve cavity provided inside, the valve body is provided with a gas inlet and a gas outlet, the gas inlet is configured to communicate the valve cavity with the interior of the housing, and the gas outlet is configured to communicate the valve cavity with the exterior of the housing; and the valve core is arranged in the valve cavity, the valve core is configured to block the gas inlet, and the valve core is configured to open the gas inlet under the action of gas inside the housing and release gas inside the battery cell.

14. The battery cell according to claim 13, wherein the valve body comprises:
a valve seat; and
a valve cover, comprising a cover top wall and a cover side wall connected to the cover top wall, wherein the cover top wall, the cover side wall and the valve seat enclose the valve cavity, the valve seat is provided with the gas inlet, the valve cover is provided with the gas outlet, the valve seat has a first through hole running through the valve seat, and the gas inlet is the first through hole.

15. The battery cell according to claim 13 or 14, wherein
the cover side wall has a second through hole running through the cover side wall, and the gas outlet is the second through hole.

16. The battery cell according to claim 15, wherein
along a direction leaving the cover top wall, the second through hole extends to an end portion of the cover side wall; and
optionally, a plurality of second through holes are provided, and the plurality of second through holes are spaced apart in a circumferential direction of the cover side wall.

17. The battery cell according to any one of claims 14 to 16, wherein
the valve cover further comprises a flanging wall, the cover side wall connects the cover top wall and the flanging wall, the flanging wall extends relative to the cover side wall toward a side leaving the valve cavity, and the flanging wall is connected to the valve seat.

18. The battery cell according to claim 17, wherein
a side of the valve seat facing towards the valve cover is provided with a first sinking groove recessed relative to a surface of the valve seat, and at least part of the flanging wall is accommodated in the first sinking groove and connected to the valve seat.

19. The battery cell according to claim 17 or 18, wherein
the flanging wall is welded to the valve seat; wherein in the circumferential direction of the cover side wall, at least part of a first weld mark of the flanging wall and the valve seat is staggered from the second through hole on the cover side wall.

20. The battery cell according to any one of claims 13 to 19, wherein the valve core comprises:
an elastic member disposed in the valve cavity; and
a blocking member movably disposed in the valve cavity, wherein the blocking member is configured to block the gas inlet under the action of the elastic member, and is configured to open the gas inlet under the action of gas inside the housing.

21. The battery cell according to claim 20, wherein
the blocking member comprises a pressing portion and a sealing portion, along an axial direction of the valve cavity, two ends of the elastic member respectively abut against the valve cover and the pressing portion, the sealing portion is connected to a side of the pressing portion facing away from the valve cover, and the sealing portion is configured to block the gas inlet.

22. The battery cell according to any one of claims 8 to 21, wherein
the first exhaust hole comprises a through-hole section and a first hole section, the through-hole section and the first hole section are arranged along a thickness direction of the wall portion, the first hole section is located on a side of the through-hole section facing away from the interior of the housing, an aperture of the first hole section is larger than an aperture of the through-hole section, and the one-way valve is at least partially accommodated in the first hole section.

23. The battery cell according to claim 22, wherein
the first hole section comprises a circumferentially arranged hole side surface, a first step surface and a second step surface are provided on the side of the valve seat facing towards the valve cover, the first step surface is closer to the valve cover than the second step surface, and an outer peripheral surface of the second step is welded to the hole side surface.

24. The battery cell according to any one of claims 1 to 7, wherein
the wall portion comprises a pressure relief mechanism and a pressure relief hole, the pressure relief hole communicates the interior of the housing and the exterior of the housing, the pressure relief mechanism comprises a pressure relief sheet, the pressure relief sheet covers the pressure relief hole, the first weakened zone is provided on the pressure relief sheet, the pressure relief mechanism is configured to actuate and relieve an internal pressure of the battery cell when the battery cell is thermally runaway, and an actuation pressure of the pressure relief mechanism is greater than an actuation pressure of the first weakened zone.

25. The battery cell according to claim 24, wherein
the pressure relief sheet is provided with a second vent hole, the second vent hole communicates the interior of the housing with the exhaust assembly, the exhaust assembly comprises the one-way valve or the gas-permeable membrane assembly, and the one-way valve or the gas-permeable membrane assembly is arranged on the pressure relief sheet and covers the second vent hole.

26. The battery cell according to any one of claims 1 to 23, wherein
the wall portion is provided with a first exhaust hole, the first exhaust hole communicates the interior of the housing with the exterior of the housing, the exhaust assembly comprises the gas-permeable membrane assembly, and the gas-permeable membrane assembly covers the first exhaust hole.

27. The battery cell according to claim 26, wherein
the gas-permeable membrane assembly comprises the gas-permeable membrane and a connecting member, the gas-permeable membrane is configured to allow gas inside the battery cell to pass through the gas-permeable membrane for discharge, the connecting member is provided with a first vent hole, and the gas-permeable membrane is arranged on the connecting member and covers the first vent hole.

28. The battery cell according to claim 27, wherein
the connecting member has a first annular land recessed relative to a surface of the connecting member, the first annular land is arranged around the first vent hole, and the gas-permeable membrane is arranged on the first annular land.

29. The battery cell according to claim 27 or 28, wherein
the gas-permeable membrane assembly further comprises a backing member, the backing member is arranged between the gas-permeable membrane and the connecting member, and a gas permeability rate of the backing member is greater than a gas permeability rate of the gas-permeable membrane.

30. The battery cell according to claim 29, wherein
the connecting member has a second annular land recessed relative to the surface of the connecting member, the second annular land is arranged around the first vent hole, and the backing member is arranged on the second annular land.

31. The battery cell according to any one of claims 27 to 30, wherein
the connecting member is a metal member.

32. The battery cell according to any one of claims 27 to 31, wherein
the gas-permeable membrane is arranged on a side of the connecting member facing towards the interior of the housing, and the gas-permeable membrane covers the first vent hole.

33. The battery cell according to any one of claims 26 to 32, wherein
the wall portion has a first recessed step recessed relative to the surface of the wall portion, the first recessed step is arranged around the first exhaust hole, and the gas-permeable membrane assembly is at least partially located on the first recessed step.

34. The battery cell according to any one of claims 1 to 33, wherein the housing comprises:
a housing body, inside which an accommodating cavity with an opening is formed, wherein the accommodating cavity is configured to accommodate an electrode assembly; and
an end cover that closes the opening;
wherein the end cover is the wall portion; or
the housing body comprises the wall portion; or
the wall portion is a wall located at the top of the housing when the battery cell is in a placed state.

35. A battery, **characterized by** comprising the battery cell according to any one of claims 1 to 34.

36. An electric device, **characterized by** comprising the battery cell according to any one of claims 1 to 34, wherein the battery cell is configured to provide electrical energy.
